(19) Europäisches Patentamt
European Patent Office
Office européen des brevets

(11) **EP 2 779 161 B1**

(12) **EUROPEAN PATENT SPECIFICATION**

(45) Date of publication and mention
of the grant of the patent:
**30.08.2017 Bulletin 2017/35**

(51) Int Cl.:
*G10L 21/0208* (2013.01)   *H04M 3/56* (2006.01)

(21) Application number: **14160030.4**

(22) Date of filing: **14.03.2014**

(54) **Spectral and spatial modification of noise captured during teleconferencing**

Spektrale und räumliche Modifikation von während Telekonferenzen aufgezeichneten Geräuschen

Modification spectrale et spatiale de bruits capturées pendant une téléconférence

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2013   US 201361781669 P**

(43) Date of publication of application:
**17.09.2014   Bulletin 2014/38**

(73) Proprietor: **Dolby Laboratories Licensing
Corporation
San Francisco, CA 94103 (US)**

(72) Inventors:
• **Gunawan, David
McMahons Point, NSW 2060 (AU)**
• **Dickins, Glenn N.
McMahons Point, NSW 2060 (AU)**
• **Holmberg, Paul
McMahons Point, NSW 2060 (AU)**
• **Cartwright, Richard J.
McMahons Point, NSW 2060 (AU)**

(74) Representative: **Dolby International AB
Patent Group Europe
Apollo Building, 3E
Herikerbergweg 1-35
1101 CN Amsterdam Zuidoost (NL)**

(56) References cited:
**EP-A1- 2 160 005     WO-A1-2010/073193**

• **NGOC Q K DUONG ET AL: "Under-determined
convolutive blind source separation using spatial
covariance models", ACOUSTICS SPEECH AND
SIGNAL PROCESSING (ICASSP), 2010 IEEE
INTERNATIONAL CONFERENCE ON, IEEE,
PISCATAWAY, NJ, USA, 14 March 2010
(2010-03-14), pages 9-12, XP031698194, ISBN:
978-1-4244-4295-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### CROSS-REFERENCE TO RELATED APPLICATIONS

This application claims benefit of priority to related, co-depending United States Provisional Patent Application number 61/781,669 filed on March 14, 2013 entitled "Spectral and Spatial Modification of Noise Captured During Teleconferencing'.

### TECHNICAL FIELD

The invention pertains to systems and methods for modifying noise captured at nodes of a teleconferencing system during a teleconference, so that the modified noise produced at the different nodes is more consistent in spectral and spatial properties. Typically, noise (but not speech) captured at each teleconferencing system endpoint is modified to generate modified noise having a frequency-amplitude spectrum which matches at least substantially a target spectrum and a spatial property set (e.g., a spatial property) which matches at least substantially a target spatial property set.

### BACKGROUND

International Patent Application no. PCT/IB2009/055803, publication WO2010073193 (A1), discloses extracting one or more speech signals as well as one or more ambient signals from sound signals captured by microphones, wherein each of the speech signals corresponds to a different speaker. Both the one or more speech signals and the one or more ambient signals are transmitted to a rendering side, to enable reproduction of the speech and ambient signals in a spatially different way at the rendering side. Apparently, by reproducing the ambient signals a feeling of "being together" is created.

It is typically desirable to provide teleconference participants a sense of perceptual continuity as they listen to rendered versions of audio captured during a multiparty conference. When different participants (users of teleconferencing system endpoints having different capabilities and spatial sound and acoustic environments) join or leave a conference, it is often desirable to create a sense of continuity and consistency, regardless of which endpoints are present (and active) at different times in the mix (to be rendered) of content (speech signal and noise) captured at endpoints. When the mix is spatially rendered, it may be desirable for the mix to provide spatial cues as to which participant is currently active (e.g., to render speech from each different endpoint so that it is perceived as emitting from a different apparent source position). The inventors have recognized that even when a teleconference system endpoint implements such spatial rendering, it is typically desirable to provide teleconference participants a sense of perceptual continuity (e.g., so that the participants are not distracted by perceived changes in rendered noise at times of low or absent speech activity) throughout a conference.

Typical embodiments of the invention provide plausible consistency throughout a conference with minimal artifacts and processing distractions in the resulting rendered audio, even when each user listens to a spatially rendered mix of audio captured at the conference system endpoints.

PCT Application International Publication No. WO 2012/109384, having international filing date February 8, 2012, published on August 16, 2012, and assigned to the assignee of the present invention, describes a method and system for suppression of noise in audio captured (e.g., using a single microphone or an array of microphones) at a conferencing system endpoint. The noise suppression is applied to the signal captured at a single endpoint, as a function of both spatial properties (e.g., to suppress noise more if it would be perceived when rendered as emitting from a source at a different location than the source of speech uttered at the endpoint) and frequency (e.g., by determining a frequency dependent suppression depth, which is an amount of gain reduction per frequency band, and reducing the gain of the noise in each frequency band in accordance with the frequency dependent suppression depth).

The present inventors have recognized the desirability of applying noise suppression as a function of both spatial content and frequency to noise captured at each endpoint of multiple endpoints of a conferencing system, to produce processed (modified) noise having spectral and spatial properties which match (at least nearly) a common target (e.g., a target frequency amplitude spectrum which is common to all endpoints, and a target spatial property set (e.g., a single target spatial property) which is common to all endpoints). By producing modified noise which is more consistent (from endpoint to endpoint) in spectral and spatial properties than is the original unmodified noise from the endpoints, typical embodiments of the present invention provide conference participants a sense of perceptual continuity when sound is rendered in response to content (including the modified noise) captured at multiple endpoints (e.g., a mix of content captured at the endpoints, including the modified noise from each endpoint), for example, so that the participants are not distracted by perceived changes in rendered noise at times of low or absent speech activity during a conference.

Above-cited PCT International Publication No. WO 2012/109384 suggests applying noise suppression to noise captured by microphones at a single endpoint, as a function of spatial properties (e.g., to suppress the noise more if it would be perceived when rendered as coming from a source at a different location than the source of speech uttered at the endpoint). In contrast, typical embodiments of the present invention perform noise suppression as a function of spatial properties (sometimes referred to herein as "spatial warping") to make noise (e.g., room noise) captured at each of multiple endpoints of a conferencing system more similar from endpoint to endpoint. In a class of embodiments of the invention, spatial warping (e.g., determined by a warping matrix) and spectral modification (which may be implemented by the same warping matrix, or by a separate gain stage) is applied to noise captured at each endpoint of a set of at least two endpoints of a conferencing system, and the audio (including the modified noise) captured at the endpoints is typically then mixed (e.g., at a server) to generate a mixed signal which can be rendered (e.g., at an endpoint) to enable a user to listen to a mix of sound captured at multiple endpoints of a conferencing system.

BRIEF DESCRIPTION OF THE INVENTION

In a first class of embodiments, the invention is a method for modifying noise captured during a conference at each endpoint of a set of at least two endpoints of a teleconferencing system, said method including steps of:

(a) generating first noise samples indicative of noise captured at a first one of the endpoints and second noise samples indicative of noise captured at a second one of the endpoints, the first noise samples being a first subset of a set of first frames of audio samples captured at the first one of the endpoints during the conference, each frame of the first subset of the set of first frames being indicative of noise but not a significant level of speech, and each frame of a second subset of the set of first frames being indicative of speech uttered by a conference participant at the first one of the endpoints, and the second noise samples being a first subset of a set of second frames of audio samples captured at the second one of the endpoints during the conference, each frame of the first subset of the set of second frames being indicative of noise but not a significant level of speech, and each frame of a second subset of the set of second frames being indicative of speech uttered by a conference participant at the second one of the endpoints; and
(b) modifying the first noise samples to generate first modified noise samples indicative of modified noise having a frequency-amplitude spectrum which at least substantially matches a target spectrum, and at least one spatial property which at least substantially matches at least one target spatial property, and modifying the second noise samples to generate second modified noise samples indicative of modified noise having a frequency-amplitude spectrum which at least substantially matches the target spectrum, and at least one spatial property which at least substantially matches the target spatial property.

Typically, a set of frames of audio samples is captured at each endpoint during the conference, the first noise samples are a first subset of the set of frames, each frame of a second subset of the set of frames is indicative of speech uttered by a conference participant (and typically also noise), each frame of the first subset is indicative of noise but not a significant level of speech, and the first modified noise samples are generated by modifying the first subset of the set of frames.

The method further includes the step of:

(c) generating first encoded audio at the first one of the endpoints by encoding the first modified noise samples and encoding each frame of the second subset of the set of first frames, and generating second encoded audio at the second one of the endpoints by encoding the second modified noise samples and encoding each frame of the second subset of the second frames.

In a class of examples that are useful for understanding the invention, a teleconferencing method includes the steps of:

(a) at each endpoint of a set of at least two endpoints of a teleconferencing system, determining a sequence of audio frames indicative of audio captured at the endpoint during a conference, wherein each frame of a first subset of the frames is indicative of speech uttered by a conference participant (and typically also noise), each frame of a second subset of the frames is indicative of noise but not a significant level of speech;
(b) at said each endpoint, generating modified frames by modifying each frame of the second subset of the frames, such that each of the modified frames is indicative of modified noise having a frequency-amplitude spectrum which at least substantially matches a target spectrum, and a spatial property set (e.g., a spatial property) which at least substantially matches a target spatial property set; and
(c) at said each endpoint, generating encoded audio including by encoding the modified frames and encoding each frame of the first subset of the frames.

Typically also, the method includes steps of: transmitting the encoded audio generated at said each endpoint to a server of the teleconferencing system, and at the server, generating conference audio indicative of a mix or sequence of audio captured at different ones of the endpoints.

In typical embodiments, the invention is a method and system for applying noise suppression at each endpoint (of multiple endpoints of a conferencing system) to modify noise (but typically not speech) captured at the endpoint in accordance with a common target (e.g., a target frequency amplitude spectrum and a target spatial property set) so that the modified noise at the different endpoints is more consistent in spectral and spatial properties, where the same target is used for all endpoints. This typically includes determining a set of frequency dependent values $SNR_i$, which determine a noise suppression gain per frequency band (where index "i" identifies the band) equal to the difference between the level of noise (captured at an individual endpoint) in the band and a target level (e.g., common to all endpoints) for the band, and suppressing the noise in accordance with the set of frequency dependent values $SNR_i$.

More generally, there are two components to modification of captured noise in accordance with the invention. These are spectral matching (the matching of a frequency-amplitude spectrum of captured noise to a target spectrum) and spatial matching.

To perform spectral matching, typical embodiments of the invention apply a noise suppression rule which is adaptively configured to suppress captured noise so that the suppressed noise has, on average, a spectral profile which matches (or substantially matches) a target spectrum. Typically, this is implemented during pre-processing, before each frame of suppressed noise (and each frame of speech captured at the teleconferencing system node at which the noise was captured) undergoes encoding. Typically, the frequency dependent pre-processing for noise suppression is applied, at each of two or more endpoints of a teleconferencing system, equally across a set of soundfield channels (each indicative of sound captured at a different one of the endpoints) so that when the soundfield channels are mixed or switched (e.g., at a server) there is no perceived spatial movement of audio sources between time intervals of voice and noise activity. There is one spectral suppression target common to all the endpoints, and this target is employed to modify noise captured at each of the endpoints.

In typical embodiments, spatial matching is implemented by applying a spatial warping matrix to noise after application of spectral shaping suppression gain to the noise. The spatial warping matrix is applied to modify at least one spatial characteristic of the noise asserted thereto (e.g., to make the modified noise isotropic, or to rotate the apparent source of the noise to make the modified apparent source position coincide with the apparent position of a conference participant who utters speech captured at the same endpoint at which the noise is captured). In other embodiments of the invention, spatial and spectral modification are not performed separately (and sequentially), and instead, both spatial modification (e.g., warping) of input audio and spectral modification of the input audio is performed in a single operation (e.g., by application of a single, non-unitary matrix to the input audio).

It is known to artificially add noise to teleconferencing audio in periods of complete silence. Such noise is referred to as "comfort noise" or "presence noise." Adding presence noise can overcome the high impact of complete silence in between times of speech activity. In typical embodiments of the invention, a goal of the spatial matching is to achieve a modified background soundfield (i.e., the soundfield determined by the modified noise) that is similar in spatial properties to comfort noise that is injected somewhere between the point of capture and the process of rendering at a receiving endpoint. For example, the modified background soundfield (for each endpoint) may have spatial properties similar to the spatial properties of comfort noise to be applied to a mix (to be rendered) of all the modified individual endpoint signals. One example of a desired background soundfield spatial property is isotropy. For example, in some embodiments spatial modification is performed on multichannel noise in horizontal B-format (noise in "WXY" format) to generate isotropic modified noise, so that the components W, X and Y of the modified data will be uncorrelated, and the components X and Y of the modified data will have similar or equal power. Such modified noise will not be perceived to have a spatial preference or orientation bias in the modified soundfield.

It is possible to overlay (mix) continuously present comfort noise (also referred to as "presence noise") with a mix of speech signals captured at endpoints of a conferencing system. This can overcome the high impact of complete silence in between times of speech activity. A class of embodiments of the invention provides a complementary approach, whereby background soundfields (of different endpoints of a teleconferencing system) are modified at the point of capture (i.e., at each individual capturing endpoint) to be more consistent both in spectral and spatial properties (i.e., to match target spectral and spatial properties that are common to all the endpoints). This has the advantage of producing modified versions of background soundfields captured at different locations which are more consistent and therefore decreasing the burden of processing (at the point of implementing a final mix of sound from multiple endpoints, or of switching between active endpoints) to achieve perceptual continuity. Some embodiments of the invention make use of presence noise (e.g., overlayed by a server with a mix or sequence of speech from speech-signal-capturing endpoints of a conferencing system), as well as modification (at each endpoint) in accordance with the invention of the noise portion of audio captured at each speech-signal-capturing endpoint.

The modification of noise in accordance with typical embodiments of the invention to match target spectral and spatial characteristics, and generation of a mix or sequence of teleconference endpoint signals (where each of the signals input to the mixing stage is indicative of speech captured at a different endpoint of a conferencing system, and noise that has been modified in accordance with the invention) ensures consistency (at least moderate consistency) of the frequency-amplitude spectrum and spatial properties of perceived noise when the mix or sequence is rendered. This can help to create a sense of connectedness and plausibility which lowers the distraction and loss of intelligibility associated with sudden shifts in the source and content of the signal(s) included in the mix.

Another class of embodiments provides a system configured for use as a teleconferencing system endpoint in a teleconferencing system comprising a link and at least two teleconferencing system endpoints coupled to the link. The system includes: a microphone array; a first subsystem coupled and configured to generate noise samples indicative of noise captured during a conference by the microphone array; and a second subsystem coupled and configured to modify the noise samples to generate modified noise samples indicative of modified noise having a frequency-amplitude spectrum which at least substantially matches a target spectrum, and at least one spatial property which at least substantially matches at least one target spatial property.

The noise samples are a first subset of a set of frames of audio samples captured during the conference, each frame of a second subset of the set of frames is indicative of speech uttered by a conference participant, and each frame of the first subset is indicative of noise but not a significant level of speech.

The system further includes an encoder configured to generate encoded audio by encoding the modified noise samples and encoding each frame of the second subset of the set of frames.

For this system, the target spectrum and the at least one target spatial property are common to the plurality of teleconferencing endpoints of the teleconferencing system.

In some embodiments, the second subsystem is configured to generate the modified noise samples by modifying the first subset of the set of frames.

In some embodiments, additionally or alternatively, the at least one target spatial property includes at least one target spatial property for each band of at least one frequency band of the noise samples, and wherein the second subsystem is coupled and configured to: determine, for said each band, a covariance matrix indicative of at least one spatial property of the noise in the band indicated by the noise samples; generate intermediate samples by applying band-specific gain to said each band of the noise samples; and process the intermediate samples to generate the modified noise samples, including by applying a band-specific warping matrix to each band of the intermediate samples, wherein the warping matrix for each band is determined by the covariance matrix for the band and the at least one target spatial property for said band.

In some embodiments, additionally or alternatively, the at least one target spatial property includes at least one target spatial property for each band of at least one frequency band of the noise samples, and wherein the second subsystem is coupled and configured to: determine, for said each band, a data structure indicative of at least one spatial property of the noise in the band indicated by the noise samples; generate intermediate samples by applying band-specific gain to said each band of the noise samples; and process the intermediate samples to generate the modified noise samples, including by applying a band-specific warping matrix to each band of the intermediate samples, wherein the warping matrix for each band is determined by the data structure for the band and the at least one target spatial property for said band.

In some embodiments, additionally or alternatively, the at least one target spatial property includes at least one target spatial property for each band of at least one frequency band of the noise samples, and wherein the second subsystem is coupled and configured to: determine, for said each band, a covariance matrix indicative of at least one spatial property of the noise in the band indicated by the noise samples; and process the noise samples to generate the modified noise samples, including by applying a band-specific spectral modification and warping matrix to each band of the noise samples, wherein the spectral modification and warping matrix for each band is determined by the covariance matrix for the band, the at least one target spatial property for said band, and the target spectrum.

In some embodiments, additionally or alternatively, the at least one target spatial property includes at least one target spatial property for each band of at least one frequency band of the noise samples, and wherein the second subsystem is coupled and configured to: determine, for said each band, a data structure indicative of at least one spatial property of the noise in the band indicated by the noise samples; and process the noise samples to generate the modified noise samples, including by applying a band-specific spectral modification and warping matrix to each band of the noise samples, wherein the spectral modification and warping matrix for each band is determined by the data structure for the band, the at least one target spatial property for said band, and the target spectrum.

In some embodiments, additionally or alternatively, said system is a telephone system including a processor programmed to implement the first subsystem and the second subsystem.

In some embodiments, additionally or alternatively, said system is a telephone system including a digital signal processor programmed to implement the first subsystem and the second subsystem.

Another class of examples that are useful for understanding the invention relates to a teleconferencing system, the teleconferencing system including: a link and at least two endpoints coupled to the link. Each of the endpoints includes: a microphone array; a first subsystem coupled and configured to determine a sequence of audio frames indicative of audio captured using the microphone array during a conference, wherein each frame of a first subset of the frames is indicative of speech uttered by a conference participant, each frame of a second subset of the frames is indicative of noise but not a significant level of speech; a second subsystem coupled and configured to generate modified frames by modifying each frame of the second subset of the frames, such that each of the modified frames is indicative of modified noise having a frequency-amplitude spectrum which at least substantially matches a target spectrum, and a spatial property set which at least substantially matches a target spatial property set; and an encoding subsystem, coupled and configured to generate encoded audio including by encoding the modified frames and encoding each frame of the first subset of the frames.

Additionally or alternatively, the system may also include: a server coupled to the link, wherein each of the endpoints is configured to transmit the encoded audio generated therein via the link to the server, and the server is configured to generate conference audio indicative of a mix or sequence of audio captured at different ones of the endpoints.

Additionally or alternatively, the target spatial property set may include at least one target spatial property for each band of at least one frequency band of the noise, and the second subsystem of each of the endpoints may include: a subsystem, coupled and configured to determine, for said each band of noise indicated by each frame of the second subset of the frames, a covariance matrix indicative of at least one spatial property of the noise in the band indicated by said frame; a subsystem, coupled and configured to generate intermediate frames by applying band-specific gain to the second subset of the frames; and a subsystem, coupled and configured to process the intermediate frames to generate the modified frames, including by applying a band-specific warping matrix to each band of each of the intermediate frames, wherein each said warping matrix is determined by the covariance matrix for noise in the band indicated by one said frame of the second subset of the frames and the at least one target spatial property for said band.

Additionally or alternatively, the target spatial property set may include at least one target spatial property for each band of at least one frequency band of the noise, and the second subsystem of each of the endpoints may include: a subsystem, coupled and configured to determine, for said each band of noise indicated by each frame of the second subset of the frames, a data structure indicative of at least one spatial property of the noise in the band indicated by said frame; a subsystem, coupled and configured to generate intermediate frames by applying band-specific gain to the second subset of the frames; and a subsystem, coupled and configured to process the intermediate frames to generate the modified frames, including by applying a band-specific warping matrix to each band of each of the intermediate frames, wherein each said warping matrix is determined by the data structure for noise in the band indicated by one said frame of the second subset of the frames and the at least one target spatial property for said band.

Additionally or alternatively, the target spatial property set may include at least one target spatial property for each band of at least one frequency band of the noise, and the second subsystem of each of the endpoints may include: a subsystem, coupled and configured to determine, for said each band of noise indicated by each frame of the second subset of the frames, a covariance matrix indicative of at least one spatial property of the noise in the band indicated by said frame; and a subsystem, coupled and configured to process each frame of the second subset of the frames to generate the modified frames, including by applying a band-specific spectral modification and warping matrix to each band of said each frame of the second subset of the frames, wherein the spectral modification and warping matrix for each band of said each frame is determined by the covariance matrix for the noise in the band indicated by said frame, the at least one target spatial property for said band, and the target spectrum.

Additionally or alternatively, the target spatial property set may include at least one target spatial property for each band of at least one frequency band of the noise, and the second subsystem of each of the endpoints may include: a subsystem, coupled and configured to determine, for said each band of noise indicated by each frame of the second subset of the frames, a data structure indicative of at least one spatial property of the noise in the band indicated by said frame; and a subsystem, coupled and configured to process each frame of the second subset of the frames to generate the modified frames, including by applying a band-specific spectral modification and warping matrix to each band of said each frame of the second subset of the frames, wherein the spectral modification and warping matrix for each band of said each frame is determined by the data structure for the noise in the band indicated by said frame, the at least one target spatial property for said band, and the target spectrum.

Additionally or alternatively, the each of the endpoints may be a telephone system including a processor programmed to implement the first subsystem and the second subsystem.

Additionally or alternatively, said system may be a telephone system including a digital signal processor programmed to implement the first subsystem and the second subsystem.

Typical embodiments of the invention provide a means for achieving consistency in at least one spatial property (e.g., correlation and/or diversity) and spectral properties between noise (background or residual), captured with speech during a teleconference at different endpoints (typically in different rooms), when a mix of the noise and speech captured at a sequence of different subsets of the endpoints is rendered as a soundfield. Typically, both a target spectrum (a target noise value for each band of a set of frequency bands), and a target spatial property (e.g., a target spatial bias, which is typically fairly smooth and isotropic or spatially broad), are specified. Noise captured at each endpoint of a teleconferencing system is modified to generate modified noise having a frequency-amplitude spectrum which matches (at least substantially) the target spectrum and a spatial property which matches (at least substantially) the target spatial property. Typically, the speech captured at the endpoints is not so modified. Typically, during periods of relatively low speech activity (e.g., as determined by classification of signal activity and scene analysis), a corrective suppression depth (as a function of frequency) and spatial mixing are applied to the noise to achieve a match (at least approximately) to the target spectrum and spatial property, and during periods of relatively high speech activity, the corrective suppression depth (as a function of frequency) and spatial mixing are not applied to the noise.

Typically, the target is chosen so as not to require too much departure from typical conference rooms, and also to provide an acceptably pleasant background presence in the mix rendered by the endpoints of the conferencing system.

Aspects of the invention include a system configured (e.g., programmed) to perform any embodiment of the inventive method, and a computer readable medium (e.g., a disc) which stores code (in tangible form) for implementing any embodiment of the inventive method or steps thereof For example, the inventive system can be or include a programmable general purpose processor, digital signal processor, or microprocessor (e.g., included in, or comprising, a teleconferencing system endpoint or server), programmed with software or firmware and/or otherwise configured to perform any of a variety of operations on data, including an embodiment of the inventive method or steps thereof. Such a general purpose processor may be or include a computer system including an input device, a memory, and a processing subsystem that is programmed (and/or otherwise configured) to perform an embodiment of the inventive method (or steps thereof) in response to data asserted thereto.

## BRIEF DESCRIPTION OF THE DRAWINGS

FIG. 1 is a block diagram of an embodiment of the inventive teleconferencing system.

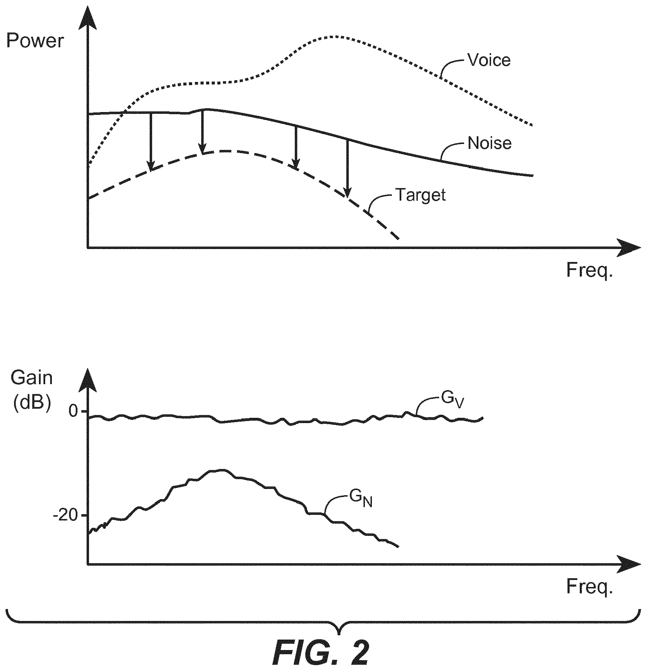

FIG. 2 is a set of two graphs. In the upper graph, the curve labeled "Voice" is a frequency-amplitude spectrum (power spectrum) of typical speech captured during a telephone conference, the "Noise" curve is a frequency-amplitude spectrum (power spectrum) of typical background noise captured during the conference, and the "Target" curve is a target frequency-amplitude spectrum (power spectrum) for noise captured during the conference. In the lower graph, the curve labeled "$G_N$" indicates gain suppression control values (plotted as a function of frequency) for modifying the noise of the upper graph so that the modified noise has a power spectrum which matches the target spectrum of the upper graph, and the curve labeled "$G_V$" indicates gain suppression control values (plotted as a function of frequency) generated in typical embodiments of the invention for modifying the speech indicated by the "Voice" curve of the upper graph.

FIG. 3 is a graph of frequency amplitude spectra of two typical noise signals (labeled N1 and N2) that could be processed in accordance with embodiments of the inventive method, and a target frequency amplitude spectrum (labeled "T") which could be employed in these embodiments.

FIG. 4 is a block diagram of an embodiment of the inventive system.

FIG. 5 is a block diagram of another embodiment of the inventive system.

## NOTATION AND NOMENCLATURE

Throughout this disclosure, including in the claims, the terms "speech" and "voice" are used interchangeably in a broad sense to denote audio content perceived as a form of communication by a human being, or a signal (or data) indicative of such audio content. Thus, "speech" determined or indicated by an audio signal may be audio content of the signal which is perceived as a human utterance upon reproduction of the signal by a loudspeaker (or other sound-emitting transducer).

Throughout this disclosure, including in the claims, the term "noise" is used in a broad sense to denote audio content other than speech, or a signal (or data) indicative of such audio content (but not indicative of a significant level of speech). Thus, "noise" determined or indicated by an audio signal captured during a teleconference (or by data indicative of samples of such a signal) may be audio content of the signal which is not perceived as a human utterance upon reproduction of the signal by a loudspeaker (or other sound-emitting transducer).

Throughout this disclosure, including in the claims, "speaker" and "loudspeaker" are used synonymously to denote any sound-emitting transducer (or set of transducers) driven by a single speaker feed. A typical set of headphones includes two speakers. A speaker may be implemented to include multiple transducers (e.g., a woofer and a tweeter), all driven by a single, common speaker feed (the speaker feed may undergo different processing in different circuitry branches coupled to the different transducers).

Throughout this disclosure, including in the claims, each of the expressions "monophonic" audio, "monophonic" audio signal, "mono" audio, and "mono" audio signal, denotes an audio signal capable of being rendered to generate a single speaker feed for driving a single loudspeaker to emit sound perceivable by a listener as emanating from one or more sources, but not to emit sound perceivable by a listener as originating at an apparent source location (or two or more apparent source locations) distinct from the loudspeaker's actual location.

Throughout this disclosure, including in the claims, the expression performing an operation "on" a signal or data (e.g., filtering, scaling, transforming, or applying gain to, the signal or data) is used in a broad sense to denote performing the operation directly on the signal or data, or on a processed version of the signal or data (e.g., on a version of the signal that has undergone preliminary filtering or pre-processing prior to performance of the operation thereon).

Throughout this disclosure including in the claims, the expression "system" is used in a broad sense to denote a device, system, or subsystem. For example, a subsystem that implements a decoder may be referred to as a decoder system, and a system including such a subsystem (e.g., a system that generates X output signals in response to multiple inputs, in which the subsystem generates M of the inputs and the other X - M inputs are received from an external source) may also be referred to as a decoder system.

Throughout this disclosure including in the claims, the term "processor" is used in a broad sense to denote a system or device programmable or otherwise configurable (e.g., with software or firmware) to perform operations on data (e.g., audio, or video or other image data). Examples of processors include a field-programmable gate array (or other configurable integrated circuit or chip set), a digital signal processor programmed and/or otherwise configured to perform pipelined processing on audio or other sound data, a programmable general purpose processor or computer, and a programmable microprocessor chip or chip set.

Throughout this disclosure including in the claims, the term "couples" or "coupled" is used to mean either a direct or indirect connection. Thus, if a first device couples to a second device, that connection may be through a direct connection, or through an indirect connection via other devices and connections.

DETAILED DESCRIPTION OF THE PREFERRED EMBODIMENTS

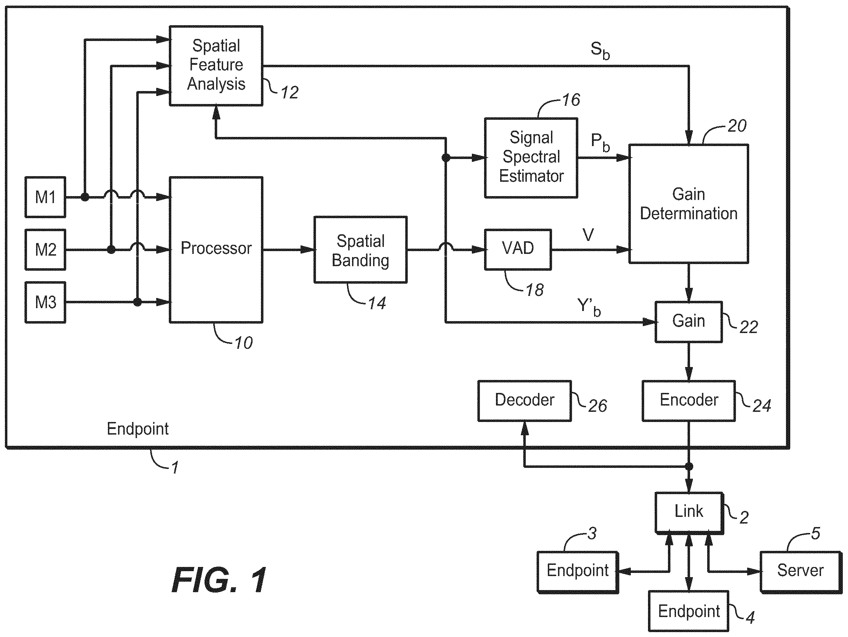

Many embodiments of the present invention are technologically possible. It will be apparent to those of ordinary skill in the art from the present disclosure how to implement them. Embodiments of the inventive system and method will be described with reference to FIGS. 1, 2, 3, 4, and 5.

Fig. 1 is a simplified block diagram of an embodiment of the inventive teleconferencing system, showing logical components of the signal path. The system comprises nodes (teleconferencing server 5, endpoints 3, 4, and 5, and optionally other endpoints) coupled to each other by link 2. Each of the endpoints is a telephone system (e.g., a telephone). In typical implementations, link 2 is a link (or access network) of the type employed by a conventional Voice over Internet Protocol (VOIP) system, data network, or telephone network (e.g., any conventional telephone network) to implement data transfer between telephone systems. In typical use of the system, users of at least two of the endpoints are participating in a telephone conference.

Each node of the Fig. 1 system is configured to perform encoding of audio for transmission over link 2 and decoding of encoded audio received from link 2.

Endpoint 1 of Fig. 1 includes encoder 24, which is coupled and configured to assert to link 2 an encoded audio signal for transmission via link 2 to server 5 or to each of endpoints 3 and 4 and any other endpoints of the system. Endpoint 1 is also configured to receive encoded audio signals transmitted over link 2 from other nodes of the system, and to decode such signals in decoder 26.

More specifically, endpoint 1 of Fig. 1 is coupled and configured to capture audio signals $A_1$-$A_3$ using microphones M1, M2, and M3, and the captured audio is indicative of a sequence of speech uttered by a participant in a telephone conference (and noise), and noise alone (at times when the participant does not utter speech). Endpoint 1 includes microphones M1, M2, and M3 which are configured to capture sound during a teleconference, and elements 10, 12, 14, 16, 18, 20, 22, 24, and 26, coupled as shown in Fig. 1 and configured to generate, in response to the outputs of the microphones, an encoded audio signal for transmission via link 2 to server 5 or to each of endpoints 3 and 4 and any other endpoints of the Fig. 1 system.

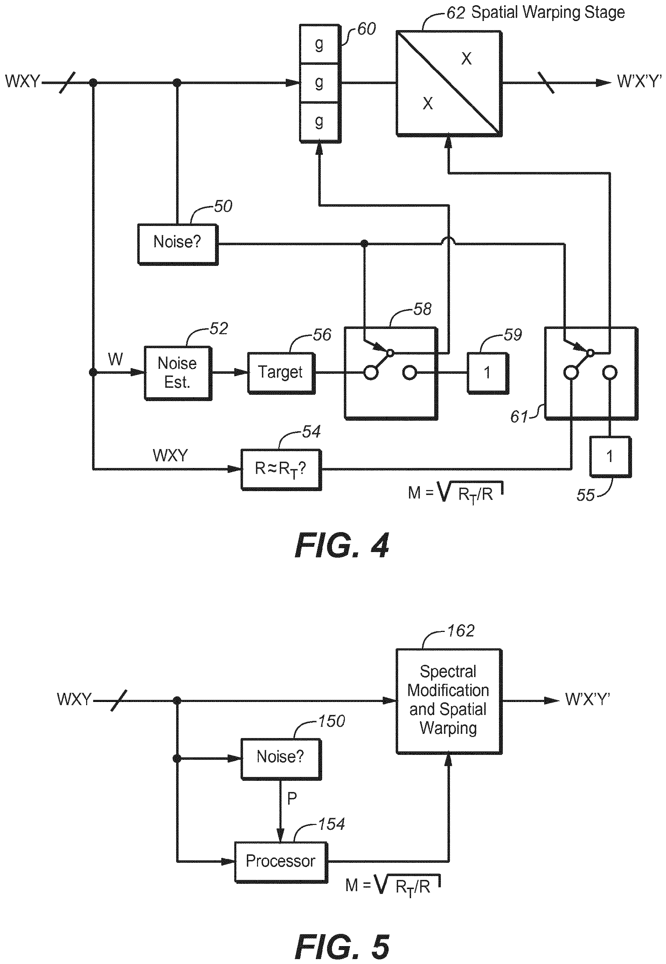

Processor 10 is configured to accept (as input audio) the captured audio signals that are output from microphones M1, M2, and M3 (or another set of microphones, in variations on the Fig. 1 embodiment), to sample the input audio, to perform a time-domain to frequency-domain transform on the resulting samples, and to generate pre-processed audio in response to the frequency-domain samples. In some implementations, the pre-processed audio is a mixed-down, single-channel, frequency domain audio signal (e.g., produced in a beamforming stage or subsystem of processor 10). In other embodiments, the pre-processed audio is a multi-channel signal (e.g., a three-channel audio signal in WXY format, as in the embodiments of Fig. 4 and Fig. 5 to be described below). In some implementations, processor 10 performs beamforming (in the time domain) prior to transformation into the frequency domain.

Each channel of the pre-processed, frequency-domain output of processor 10 (e.g., each of the W, X, and Y channels of a multi-channel, frequency-domain signal output from processor 10) is a sequence of frames (or blocks) of audio samples. For simplicity, we shall refer to each block or frame of samples of all the channels (which may consist of a single channel) output from processor 10 as a "frame" of samples. The samples in each channel of a frame output from processor 10 can be denoted as a sequence of samples $Y_n$, $n=0, ..., F$-1. In response to each channel of each frame of samples output from processor 10, spectral banding element 14 generates a sequence of frequency banded samples, which can be denoted as $Y'_b$, $b=1, ..., B$, where index $b$ denotes frequency band. For each frame, the sequence of samples $Y'_b$ includes, for each frequency band, $b$, a set of K samples, $Y'_{bk}$, where k is an index in the range from 0 through K-1, and K is the number of channels of the frame.

Banded spatial feature estimator 12 is configured to generate spatial probability indicators $S_b$ in response to the banded samples generated in processor 10 (or in response to the raw outputs of microphones M1, M2, and M3). These indicators can indicate an apparent source location (or range of locations) of sound indicated by the samples in some or all of the frequency bands of a frame of the captured audio, and can be used to spatially separate a signal into components originating from a desired location and those not. Beamforming in processor 10 may provide some degree of spatial selectivity, e.g., to achieve some suppression of out-of-position signal power and some suppression of noise.

We sometimes denote as $P_b$ the total power spectrum (or other amplitude metric spectrum) of the banded, mixed-down samples, $Y'_b$, in band $b$ of a frame of the captured audio output from stage 14 (or in a channel of such frame of captured audio). The spectrum $P_b$ is determined by spectral estimator 16. For example, if the captured audio output from stage 14 consists of a single channel, stage 16 may determine a power spectrum from each frame of samples of this channel. For another example, if the captured audio output from stage 14 comprises channels W, X, and Y, stage 16 may determine a power spectrum from each frame of samples of the W channel only.

We sometimes denote as $N'_b$ the power spectrum (or other amplitude metric spectrum) of the noise component (not indicative of speech by a conference participant) of the samples, $Y'_b$, in band $b$ of each channel (or of at least one channel) of the captured audio output from stage 14. Each such spectrum may also be determined by spectral estimator 16. Out-of-position power, sometimes denoted as $Power'_{OutOfBeam}$, and sometimes called out-of-beam power and out-of-location power, is the power or power spectrum (or other amplitude metric spectrum) determined from the samples, $Y'_b$, that does not have an appropriate phase or amplitude mapping consistent with sound incident from a desired location (e.g., a known or expected location of a conference participant relative to a capturing microphone array), and desired signal power, sometimes denoted as $Power'_{Desired}$ is the remainder of $P_b$ that is not noise $N'_b$ (or noise or echo) or $Power'_{OutOfBeam}$.

Voice activity detector (VAD) 18 is configured to generate a control value (denoted as "V" in Fig. 1) indicative of whether each frame of the samples, $Y'_b$, is indicative of speech (e.g., speech in the presence of noise) or only noise.

In response to the control value V, the power spectrum $P_b$, and the spatial probability indicators $S_b$ for each frame of samples, gain determination stage 20 determines a set of gain control values for configuring gain stage 22 to apply an appropriate gain to each frequency band of the samples. In response to the control value V, the power spectrum $P_b$, and the spatial probability indicators $S_b$ for each frame indicative of noise (but not speech), gain determination stage 20 determines a set of gain control values for configuring gain stage 22 to apply an appropriate gain to each frequency band of each channel of the samples of the frame, to cause the modified samples (of each channel) that are output from stage 22 to have a frequency amplitude spectrum which matches a target spectrum, and to have spatial properties which match a target set of spatial properties. The gain control values generated in stage 20 for each frame are indicative of a gain value for each of the frequency bands of the samples of each channel of the frame.

In accordance with a class of embodiments of the invention, an implementation of stage 20 (or a similar gain determination stage) in each endpoint of the Fig. 1 system determines gain control values for configuring gain stage 22 to modify each frame of noise samples captured at the endpoint in accordance with a common target (a target frequency amplitude spectrum and a target spatial property set) so that the modified noise at the different endpoints is more consistent in spectral and spatial properties than is the unmodified noise. Typically, all the endpoints use the same target. Thus, noise captured at each endpoint is modified to generate modified noise having a frequency-amplitude spectrum which matches (at least substantially) a target spectrum and at least one spatial property which matches (at least substantially) a target spatial property. Typically, the speech captured at the endpoints is not so modified. For example, in response to each frame of samples $Y'_b$ which is indicative of speech (as determined by VAD 18), stage 20 determines a set of default (speech) gain control values for configuring gain stage 22 to modify the frame.

With reference again to Fig. 1, gain stage 22 is configured to apply to each frame of each channel of samples $Y'_b$, the gain determined by the gain control values generated in stage 20 for the frame. For each frame which is indicative of noise (but not speech), stage 22 modifies the samples of the frame to generate modified noise samples having a frequency-amplitude spectrum which matches (at least substantially) a target spectrum and at least one spatial property which matches (at least substantially) a target spatial property. The samples output from stage 22 are encoded in encoder 24, and the resulting encoded audio signal is typically then transmitted via link 2 to server 5 or to each of endpoints 3 and 4 and any other endpoints of the system.

Endpoint 1 typically performs other (conventional) processing on input audio signals captured by microphones M1, M2, and M3, to generate the encoded audio output which is asserted to link 2, e.g., in additional subsystems or stages (not shown in Fig. 1). Also, endpoint 1 typically performs (conventional) processing on decoded audio signals (received over link 2 and decoded in decoder 26) in subsystems or stages (not shown in Fig. 1), e.g., including rendering for playback on loudspeakers or a head set (not shown in Fig. 1).

Endpoints 3 and 4 can (but need not) be identical to endpoint 1.

Server 5 is configured to generate conference audio indicative of a mix or sequence of audio captured at different ones of the endpoints of the Fig. 1 system, and to encode the conference audio and transmit the encoded conference audio via link 2 for decoding and rendering at the endpoints. Typically, Server 5 is configured to generate a mix (to be rendered at each endpoint of the Fig. 1 system after encoding in server 5 and transmission to the endpoint via link 2) of content (speech signal and noise) captured at endpoints of the Fig. 1 system.

There are two components to modification of captured noise in accordance with typical embodiments of the invention. These are spectral matching (the matching of a frequency-amplitude spectrum of captured noise to a target spectrum) and spatial matching.

To perform spectral matching, typical embodiments of the invention apply a noise suppression rule which is adaptively configured to suppress captured noise so that the suppressed noise has, on average, a spectral profile which matches (or substantially matches) a target spectrum. Typically, this is implemented during pre-processing, before each frame of suppressed noise (and each frame of speech captured at the teleconferencing system node at which the noise was captured) undergoes encoding. Typically, the frequency dependent pre-processing for noise suppression is applied, at each of two or more endpoints of a teleconferencing system, equally across a set of soundfield channels (each indicative of sound captured at a different one of the endpoints) so that when the soundfield channels are mixed (e.g., at a server) there is no perceived spatial movement of audio sources between time intervals of voice and noise activity. As such, there is one spectral suppression target common to all the endpoints, and this target is employed to modify noise captured at each of the endpoints.

The spectral noise modification (suppression) may be implemented so as to impart a constant signal to noise ratio improvement. Alternatively, it may be implemented so as to impart not less than a predetermined minimum gain (to the noise to be modified), to prevent overly deep noise suppression. Typically, the perceived noise level (when the modified soundfields are rendered) will vary in much the same way as would occur if the original (unmodified) soundfields were rendered, albeit at a lower level after modification (suppression) in accordance with the invention. The target spectrum may be flat (or substantially flat) as a function of frequency, or it may have another shape, but the noise modification is typically applied in an effort to make the modified noise match the target, independently of the actual noise level.

For example, consider the upper graph of Fig. 2, which shows the frequency-amplitude spectrum (labeled "Voice") of typical speech captured during a telephone conference, and the frequency-amplitude spectrum (labeled "Noise") of typical background noise (not speech) captured during the conference.

Typically, it is desirable to apply gain to audio indicative of captured speech, to achieve a flat pass through of the desired speech signal. Alternatively, it is desired to apply gain to audio indicative of captured speech to achieve some predetermined spectral shape, which typically differs from the desired spectral shape for audio indicative of background noise.

Thus, a target spectrum for noise (e.g., the power spectrum labeled "Target" in the upper graph of Fig. 2) is typically predetermined. Then, gain is applied to captured audio indicative of noise to generate modified noise whose spectrum (e.g., power spectrum) at least substantially matches the target spectrum. For example, in response to input noise having the power spectrum labeled "Noise" in the upper graph of Fig. 2, gain suppression control values $G_N$ (plotted as a function of frequency in the curve labeled "$G_N$" in the lower graph of Fig. 2) are determined, and the gain of each frequency component of the input noise is reduced by the corresponding gain suppression control value $G_N$, to generate modified noise whose frequency-amplitude spectrum matches the target spectrum.

In the Fig. 2 example, gain is applied to input audio indicative of speech (speech audio having the power spectrum labeled "Voice" in the upper graph of Fig. 2), to generate modified speech whose power spectrum at least substantially matches that of the input speech. Thus, gain control values $G_V$ (e.g., those plotted as a function of frequency in the curve labeled "$G_V$" in the lower graph of Fig. 2) which are equal (or substantially equal) to zero dB are determined, and the gain of each frequency component of the input speech is modified by the corresponding gain control value $G_V$, to generate modified speech whose power spectrum matches (at least substantially) the power spectrum of the input speech.

As is well known, a set of minimum statistics or decision based averaging may be used to estimate the noise level of the input signal.

A maximum suppression depth (an amount of gain suppression determined by one of the values $G_N$ of the lower graph of Fig. 2) is calculated based on the required amount of suppression for the estimated incoming noise level (for each frequency band) to be mapped to a level at or below the target noise level (for the band) after suppression.

Where the incoming noise level (for a frequency band) is already below the desired target, typical embodiments apply no suppression is applied to the incoming noise in such band.

The pass-through gain for speech (voice) is typically set to unity. Optionally, an alternative pass-through spectrum for speech is obtained by performing a fixed equalization after pre-processing in accordance with the invention. If this equalization is also applied to the modified noise (generated in accordance with the invention), the noise target can still be achieved by performing the inventive noise suppression so as to compensate for the equalization to be later applied.

When noise suppression in accordance with typical embodiments of the invention is active, the gains applied to the input audio (in different frequency bands) vary between unity (for audio indicative of speech, the desired signal), and the gain for achieving maximum suppression (for audio indicative of background noise; not speech).

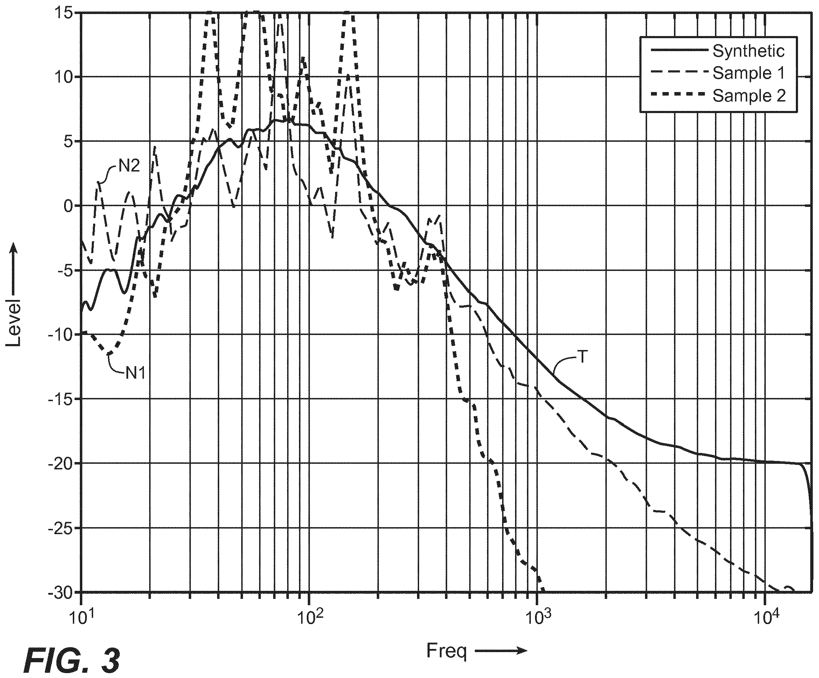

A target spectrum for modified noise is plotted as curve T in Fig. 3. Such a target noise spectrum is suitable for use in typical embodiments of the invention. The target spectrum is typical of background noise present in many offices and conference rooms at lower frequencies, and matches the spectrum of noise that is commonly injected by microphone or electrical noise at higher frequencies. When employing this target spectrum in typical embodiments, the spectrum may be scaled by the desired absolute noise output level (which is typically about 20-40dB below the desired absolute speech output level). For comparison, Fig. 3 also shows frequency amplitude spectra of two typical noise signals (labeled N1 and N2) of a type that could be modified in accordance with embodiments of the inventive method.

Modifying noise captured in different rooms (in different conferencing system endpoints) to match a single common target spectrum (as in typical embodiments of the invention) typically provides perceptual continuity and consistency to conference participants when the noise is rendered. When target spectrum T of Fig. 3 is employed, by virtue of the higher target noise level for frequencies in the range from 80 Hz to 300 Hz, the requirement for harsh suppression in these bands in the case of lower SNR is reduced. This has a positive impact on voice quality in many situations where a design goal of using a flat target spectrum could lead to voice artifacts in this critical spectral region.

It should be appreciated that if a room has a noise spectrum similar in shape but higher in absolute level than a noise target spectrum employed in accordance with the invention, the noise suppression curve generated in accordance with the invention would be (for processing captured audio indicative of background noise) at least substantially flat over frequency.

As noted above, spatial matching is the second main component to modification of captured noise in accordance with typical embodiments of the invention. Spatial matching is typically implemented by applying a spatial warping matrix (e.g., as implemented by element 62 of Fig. 4) to noise after application of spectral shaping suppression gain (e.g., as implemented by stage 60 of Fig. 4) to the noise. The spatial warping matrix typically is a unitary matrix (but it need not be a unitary matrix). In some embodiments (e.g., embodiments in which it is desired to collapse dimensionality somewhat to push the noise in a particular spatial direction), the spatial warping matrix is not unitary. The spatial warping matrix is applied to modify at least one spatial characteristic of the noise asserted thereto (e.g., to make the modified noise isotropic, or to rotate the apparent source of the noise to make the modified apparent source position coincide with the apparent position of a conference participant who utters speech captured at the same endpoint at which the noise is captured).

Typically, a goal of the spatial matching is to achieve a modified background soundfield (i.e., the soundfield determined by the modified noise) that is similar in spatial properties to presence (or "comfort") noise that is injected somewhere between the point of capture and the process of rendering at a receiving endpoint. For example, the modified background soundfield (for each endpoint) may have spatial properties similar to the spatial properties of comfort noise to be applied to a mix (to be rendered) of all the modified individual endpoint signals. One example of a desired background soundfield spatial property is isotropy. For example, in some embodiments spatial modification is performed on multichannel noise in horizontal B-format (noise in "WXY" format) to generate isotropic modified noise, so that the components W, X and Y of the modified data will be uncorrelated, and the components X and Y of the modified data will have similar or equal power. Such modified noise will not be perceived to have a spatial preference or orientation bias in the modified soundfield.

It is possible to overlay (mix) continuously present noise (sometimes referred to as "comfort noise" or "presence noise") with a mix of speech signals captured at endpoints of a conferencing system. This overcomes the high impact of complete silence in between times of speech activity. A class of embodiments of the invention provides a complementary and alternative approach, whereby background soundfields (of different endpoints of a teleconferencing system) are modified at the point of capture (i.e., at each individual capturing endpoint) to be more consistent both in spectral and spatial properties (i.e., to match target spectral and spatial properties that are common to all the endpoints). This has the advantage of producing modified versions of background soundfields captured at different locations more consistent and therefore decreasing the burden of processing (at the point of implementing a final mix of sound from multiple endpoints, or of switching between active endpoints) to achieve perceptual continuity. It is envisaged that some embodiments of the invention will make use of presence noise (overlayed by a server with a mix of speech from speech-signal-capturing endpoints of a conferencing system), as well as modification (at each endpoint) in accordance with the invention of the noise portion of audio captured at each speech-signal-capturing endpoint.

The modification of noise in accordance with typical embodiments of the invention to match target spectral and spatial characteristics, and generation of a mix of teleconference endpoint signals (where each of the signals input to the mixing stage is indicative of speech captured at a different endpoint of a conferencing system, and noise that has been modified in accordance with the invention) ensures consistency (at least moderate consistency) of the frequency-amplitude spectrum and spatial properties of perceived noise when the mix is rendered. This can help to create a sense of connectedness and plausibility which lowers the distraction and loss of intelligibility associated with sudden shifts in the source and content of the signal(s) included in the mix. In some embodiments, the inventive system is operable in a selected one of a first mode in which it modifies captured noise in accordance with the invention, and a second mode in which it does not so modify captured noise. The selection of the mode in which the endpoint operates may be user controlled or otherwise controlled.

Typical embodiments of the invention provide a means for achieving consistency in at least one spatial property (e.g., correlation and/or diversity) and spectral properties between noise (background or residual), captured with speech during a teleconference at different endpoints (typically in different rooms), when a mix of the noise and speech captured at a sequence of different subsets of the endpoints is rendered as a soundfield. Typically, both a target spectrum (a target noise value for each band of a set of frequency bands), and a target spatial property (e.g., a target spatial bias, which is typically fairly smooth and isotropic), are specified. Noise captured at each endpoint of a teleconferencing system is modified to generate modified noise having a frequency-amplitude spectrum which matches (at least substantially) the target spectrum and a spatial property which matches (at least substantially) the target spatial property. Typically, the speech captured at the endpoints is not so modified. Typically, during periods of relatively low speech activity (e.g., as determined by classification of signal activity and scene analysis), a corrective suppression depth (as a function of frequency) and spatial mixing are applied to the noise to achieve a match (at least approximately) to the target spectrum and spatial property, and during periods of relatively high speech activity, the corrective suppression depth (as a function of frequency) and spatial mixing are not applied to the noise.

Typically, the target is chosen so as not to require too much departure from typical conference rooms, and also to provide an acceptably pleasant background presence in the mix rendered by the endpoints of the conferencing system.

It has been found that captured room noise and/or capsule noise typically has some form of bias. In modifying such noise in accordance with typical embodiments, the desired spatial correction (to be achieved in accordance with the invention) may not be large, however it may be noticeable even if not large, particularly when switching rapidly between modified soundfields.

By aggregating a spatial representation of the input noise to be modified, some embodiments of the invention determine at least one noise covariance matrix (or other data structure) indicative of spatial properties in a frequency band of the input noise to be modified. Each such matrix (or other structure) is tracked, e.g., in a way similar to that (and with identical update rates) by which the estimated power spectrum of the input is tracked. Although only a mono (single channel) version of the noise power spectrum estimate (e.g., an estimate of the power spectrum of the W channel of noise in WXY format) is typically used for spectral control (and maximum noise suppression), a full covariance matrix can be aggregated (and tracked) during identified intervals of speech inactivity during a conference. In some embodiments, a more conservative approach is taken to the estimation and tracking of the spatial properties of the input noise than to estimation and tracking of its power spectrum, with a longer time window in any minimum follower and/or less aggressive updates (than those employed for power spectrum tracking).

The covariance matrix (or other indication of spatial properties of the input noise) may be calculated for each of a set of frequency bands. In simpler embodiments, it can be averaged across the main spectral bands for spatial perception (e.g., across bands in the range from about 200Hz to about 2 kHz).

Next, with reference to Fig. 4, we describe an embodiment of the inventive method and system for modifying noise captured at each of at least two endpoints of a teleconferencing system. The system of Fig. 4 is an example of an implementation of elements 16, 18, 20, and 22 in endpoint 1 of the Fig. 1 system. It is contemplated that the system of Fig. 4 would be implemented in each of at least two endpoints of a teleconferencing system, to modify noise captured at each endpoint in accordance with a common target: a target frequency amplitude spectrum which is common to all endpoints, and a target spatial property set (e.g., a single target spatial property) which is common to all endpoints.

In the Fig. 4 embodiment, the input WXY audio signal is a multichannel audio signal indicative of a soundfield captured by a microphone array (e.g., microphones M1, M2, and M3 of Fig. 1). The WXY signal may be indicative of horizontal B-format multichannel audio data, having a frequency domain representation in which for each frequency, the data are indicative of a time-dependent amplitude (W) of a source (e.g., a conference participant or other source of sound), at an azimuth angle $\theta$ with respect to the capturing microphone array. In this case, the channel "W" indicates an omnidirectional, time-dependent amplitude (typically, intervals of speech in the presence of noise, and intervals of noise alone) at each frequency, and the channels "X" and "Y" indicate X = (cos $\theta$) $\times$ W, and Y = (sin $\theta$) $\times$ W at each frequency. Optionally, to generate the WXY audio, light processing (e.g., cleaning, rendering, mixing, and/or other manipulation) is applied to audio (e.g., horizontal B-format audio) captured by a microphone array.

The Fig. 4 system includes voice activity detector 50, switches 58 and 61, noise estimation block 52, control value generation elements 56, 59, 54, and 55, gain stage 60, and spatial warping stage 62, connected as shown.

**EP 2 779 161 B1**

Voice activity detector (VAD) 50 is configured to determine whether each frame of the input audio WXY (i.e., the samples indicative of each frame of the input audio WXY) is indicative of speech (e.g., speech in the presence of noise) or only noise. In response to determining that a frame of the input audio is indicative of speech, VAD 50 places switch 58 in a state in which it asserts default gain control values (e.g., values $G_V$ shown in Fig. 2, which include a default value $G_{Vi}$ for the "$i$"th frequency band, for each value of index $i$) from block 59 to gain stage 60 to cause stage 60 to apply full (default) gain to the frame of input audio. In response to determining that a frame of the input audio is indicative of noise (not speech), VAD 50 places switch 58 in a state in which it asserts gain control values (e.g., values $G_N$ shown in Fig. 2, which include a value $G_{Ni}$ for the "$i$"th frequency band, for each value of index $i$) determined for the frame in block 56 to gain stage 60, to cause gain stage 60 to apply gain (with noise suppression as a function of frequency band) to the frame of input audio (noise) to cause the frequency amplitude spectrum of the modified noise (output from stage 60) to match a predetermined target spectrum.

For the sake of brevity, VAD 50 is referred to in decision and application as binary in nature. It should be apparent to one skilled in the art that in alternate embodiments, the VAD decision may be more of a continuous value or probability of speech indicator, and the application or decision to apply any signal processing can be implemented in a continuously varying way. Such approaches are familiar and broadly known in the art.

In response to each frame of frequency-domain samples of input audio channel W, noise estimation block 52 determines the power of input audio channel W as a function of frequency band (i.e., the power $P_i$ of W in the "$i$"th frequency band, for all values of index $i$) and asserts the $P_i$ values to block 56. In response, block 56 determines gain control values $G_{Ni}$ (one value $G_{Ni}$ for each frequency band) for configuring gain stage 60 to apply corrected gain (rather than the default gain which would otherwise be applied by stage 60) to each frequency band of the frame of input audio WXY (i.e., to each frame of input audio which consists of noise), to cause the power spectrum of output of stage 60 match a predetermined target noise spectrum. The same predetermined target noise spectrum (e.g., the target spectrum shown in Fig. 2) is employed for all frames of input noise captured during a teleconference.

Similarly, in response to determining that a frame of the input audio is indicative of speech (e.g., speech in the presence of noise), VAD 50 places switch 61 in a state in which it asserts default control values (generated or stored in element 55) to spatial warping stage 62 to cause stage 62 to pass through (unchanged) the output of gain stage 60. In this state, stage 62 does not modify the spatial characteristics of the audio output from stage 60.

In response to determining that a frame of the input audio is indicative of noise (not speech), VAD 50 places switch 61 in a state in which it asserts gain control values, M, generated in block 54 to warping stage 62, to cause stage 62 to modify (spatially warp) at least one spatial characteristic of the gain-modified version of the frame which is output from stage 60, such that the output of stage 62 has a spatial characteristic set which matches a predetermined target spatial characteristic set. Gain control values M configure stage 62 to perform warping matrix multiplication on each frequency band (or bin) of each of the three channels of the current gain-modified audio frame output from stage 60.

As will be described below, the gain control values M typically determine (or are organized as) a matrix M, of form $M = (R_T/ R)^{1/2}$, where R and $R_T$ are matrices described below, and $R_T/ R$ denotes matrix multiplication of matrix $R_T$ by the inverse of matrix R. Thus, stage 54 of Fig. 4 determines the correction (a specific warping matrix) applied by stage 62 to each band (or bin) of the spectrally modified audio output from stage 60. Matrix $M_T$ determines a target set of one or more spatial properties (e.g., a target azimuthal angle) for the modified noise to be generated by stage 62. In some embodiments, the target spatial property is isotropic (so that the modified noise output from stage 62 will be perceived, when rendered, as emitting uniformly from all directions relative to the listener). In some embodiments, the target spatial property is nonisotropic, e.g., so that the modified noise output from stage 62 will be perceived, when rendered, as emitting preferentially from some direction or directions relative to the listener (e.g., from the same direction from which rendered speech, captured in the same room as the noise, is perceived to emit). The matrix $M = (R_T/ R)^{1/2}$ is a square root matrix of form, $A^{1/2} = VSV^{-1}$, where $A = R_T/ R$ is diagonalizable as $A = VDV^{-1}$, D is a diagonal matrix, and S is a diagonal matrix which is the square root of diagonal matrix D.

The gain control values M determine a warp matrix to be applied by stage 62 to a frame of audio data WXY (e.g., they are themselves such a warp matrix). When a frame of audio data is indicative of speech (e.g., speech in the presence of noise), stage 62 does not spatially warp the frame and typically instead implements and applies to the frame an identity matrix determined by control values from block 55. When a frame of audio data is indicative of noise, stage 62 implements and applies to the frame the warp matrix determined by values M output from block 54. Conditioning may be applied to each sequence of warp matrices determined by a sequence of sets of values M asserted from block 54 to stage 62, e.g., to ensure that the spatial warping applied to a sequence of frames of noise by the conditioned sequence of warp matrices does not include any perceptually disturbing warp (e.g., rotation).

Similar conditioning (filtering) can also (or alternatively) be applied to a sequence of gain control values (determined by stage 56) to be applied to frames of noise data by stage 60, e.g., to prevent (filter out) undesired changes between the successively determined power spectra of the resulting modified frames of noise data.

The conditioning of successive sets of gain control values M output from block 54 (or successive sets of gain control values output from block 56) can be applied in any of many different ways. For example, in some embodiments,

13

the conditioning is performed in any of the ways suggested by above-cited PCT Application International Publication No. WO 2012/109384. The conditioning may employ the concept of a speech probability in each frequency bin or band. In general, such a speech probability is any monotonic function whose range is from 0 to 1 which is indicative of a probability that audio content (e.g., of a frame of input audio) in the bin (or band) is indicative of speech (if the allowed values of speech probability are more constrained, the modified noise generated in accordance with some embodiments of the invention may not be optimal in the perceptual sense). Typically, the speech probability for each bin (or band) sensibly depends on the current input audio frame (or block) and a few previous input audio frames (or blocks) of the bin (band) and neighboring bins (bands).

The conditioning of a sequence of sets of gain control values (or spatial warping matrices) may be determined by a leaky minimum follower with a tracking rate defined by at least one minimum follower leak rate parameter. The leak rate parameter(s) of the leaky minimum follower may be controlled by the probability of speech being indicated (e.g., as determined by VAD 50 of Fig. 4 or VAD 150 of Fig. 5) by the relevant frame(s) of audio data. In some embodiments, the conditioning may be performed by mixing the attenuated output signal (the output of stage 62, to which spatial warping and frequency dependent attenuation have been applied) with the input audio signal based on the speech probability ("p"). However, this approach may allow the effective attenuation to increase undesirably rapidly as the speech probability ("p") approaches zero. Another technique for implementing the conditioning employs an exponential spline (e.g., if "S" denotes the spatial warping and frequency dependent attenuation applied by stages 60 and 62, and "p" is the speech probability, then the conditioned warping and attenuation may be $S^{(1-p)}$).

In some embodiments, the conditioning may be performed by determining a covariance matrix (e.g., a broadband matrix R, of the type to be described below, determined in stage 54) over the range of interest, and determining a set of control values M (which determine a warping matrix) associated with this covariance matrix. The sequence of control value sets M (for a sequence of frames of input audio) is filtered so that changes between successive sets have gentle onsets (at transitions from input speech to input noise) but are allowed to be sudden at transitions from input noise to input speech), much like in a conventional phrasing VAD. The application of the spatial warp could fade in (e.g., over 150ms or a similar time interval) at each transition from speech to noise, and thus be largely concealed.

In Fig. 4, stage 54 determines a covariance matrix R in response to each frequency band of each frame of input WXY data. Such a frame of input WXY data is a sequence of N samples in each of the three channels (W, X, and Y), for each frequency band. In this case, the covariance matrix R for each frequency band is a $3 \times 3$ matrix, in which each element $r_{jk}$ is the covariance between the "j"th channel (W, X, or Y) and the "k"th channel (W, X, or Y) which may be expressed as:

$$r_{jk} = (1/(N\text{-}1)) \sum_{i=1}^{N} [(r_{ij} - av(r_j) (r_{ik} - av(r_k))]$$

where "$av(r_j)$" denotes the average of the N samples in the "j"th channel, $av(r_j)$" denotes the average of the N samples in the "k"th channel. One can accumulate a number of frames (e.g., T frames), and do the averaging over samples in each set of accumulated frames, e.g., so that the number N in the foregoing equation is the number of samples in each set of T accumulated frames. In typical implementations, the terms that are summed are weighted (typically with weights that decay exponentially over time, and correspond to some frequency banding envelope).

More generally, in variations on the Fig. 4 embodiment, the input audio data comprises K channels, where K is any integer greater than two, and each frame of each channel is a sequence of N audio samples for each frequency band. In this general case, the covariance matrix R for each frequency band is a $K \times K$ matrix, in which each element $r_{jk}$ is the covariance between the "j"th channel and the "k"th channel, which may be expressed as:

$$r_{jk} = (1/(N\text{-}1)) \sum_{i=1}^{N} [(r_{ij} - av(r_j) (r_{ik} - av(r_k))]$$

where "$av(r_j)$" denotes the average of the N samples in the "j"th channel, $av(r_j)$" denotes the average of the N samples in the "k"th channel. In typical implementations, the terms that are summed are weighted (typically with weights that decay exponentially over time, and correspond to some frequency banding envelope). One can accumulate a number of frames (e.g., T frames), and do the averaging over samples in each set of accumulated frames, e.g., so that the number N in the foregoing equation is the number of samples in each set of T accumulated frames.

In the general case in which the input audio data comprises K channels, the target spatial properties are indicated by a $K \times K$ target matrix $R_T$ for each frequency band, whose elements $t_{jk}$, are covariance values, with index $j$

in the range from 1 to K and index k in the range from 1 to K. In the Fig. 4 embodiment, K = 3, and the input audio comprises three channels (W, X, and Y).

Thus, the elements of matrix R determine a second order statistic of how the input audio is spatially biased. Similarly, the elements of target matrix $R_T$ (for each frequency band) determine how target noise (in the band) is spatially biased. If the channels of the input audio were independent over a significant length of time, matrix R would approach an identity matrix, asymptotically. If the elements of matrix R are accumulated only during intervals in which the input audio is indicative of only noise (not speech), e.g., as determined by VAD 50 of Fig. 4, the elements of matrix R determine a second order statistic of the noise, indicative of how the noise is spatially biased. The elements of matrix R can theoretically be any positive definite matrix values.

For example, for input audio in WXY format (as in Fig. 4), the elements of matrix R, accumulated during an interval (e.g., corresponding to a frame of input audio) in which the input audio is indicative of only noise (not speech), could be:

$$R = \begin{matrix} 1.0000 & 0.1000 & 0 \\ 0.1000 & 0.9000 & 0 \\ 0 & 0 & 0.8000 \end{matrix} \, , \qquad \text{Eq. (1)}$$

which indicates that the input noise is slightly biased in the zero azimuth direction.

In this and following examples, for simplicity we present a single real covariance matrix. It is evident to one of ordinary skill in the art that this approach can be applied generally in any transform or filterbank implementation where each covariance matrix represents some bin or band across a range of frequencies, and may potentially include complex terms in the off diagonal components.

Assuming the exemplary input audio of Equation (1), and a target matrix $R_T$ which is isotropic ($R_T$ = the identity matrix), it is apparent that the warping matrix implemented by stage 62 can be determined by the matrix, $(R_T/ R)^{1/2}$, which is a matrix square root (whose elements are gain control values for controlling operation of stage 62). Thus, if R is as shown in Equation (1) and

$$R_T = I = \begin{matrix} 1 & 0 & 0 \\ 0 & 1 & 0 \\ 0 & 0 & 1 \end{matrix} \qquad \text{Eq. (2)}$$

, then

$$M = (R_T/ R)^{1/2} = \begin{matrix} 1.0041 & -0.0545 & 0 \\ -0.0545 & 1.0586 & 0 \\ 0 & 0 & 1.1180 \end{matrix} . \qquad \text{Eq. (3)}$$

The matrix M of Equation (3) is a suitable warping matrix to be applied by stage 62 to modify a frequency band of a frame of noise (i.e., a frame of modified noise output from stage 60) to make its spatial properties match those determined by the target matrix $R_T$. Note that in Eq. (3), the third diagonal value (equal to 1.1180) is the square root of 1.25, so that matrix M of Eq. (3) scales as well as rotates the input noise, and is not a unitary matrix. In some implementations of FIG. 4, spectral modification is applied by stage 60, and stage 62 applies a unitary matrix to the output of stage 60 to spatially warp (e.g., rotate) the output of stage 60 without modifying its frequency amplitude spectrum. In other embodiments of the invention (e.g., that of Fig. 5 to be described below), a separate spectral modification stage is omitted (e.g., stage 60 is omitted) and both spatially warping and spectral modification (e.g., modification of the frequency amplitude spectrum of) the input audio is performed by application of a single, non-unitary warping matrix (e.g., that applied by stage 162 of Fig. 5).

If stage 62 applies the 3×3 matrix M of Eq. (3) to each frequency band of each frame of the three channels of audio output from stage 60 (i.e., channels W, X, and Y, which can be denoted as a time sequence of samples of an audio data vector v = (v1, v2, v3), it is true that the covariance matrix ("$R_{out}$") of the output of stage 62 is the covariance matrix of vector Mv:

$$R_{out} = E \{ Mv\} = M \, E\{v\}M^{T} = I = R_{T} \qquad \text{Eq. (4)}$$

, where $M^T$ is the transpose of matrix M, and I is the identity matrix (as in equation (2)). Since gain stage 60 does not modify the spatial properties of the input noise WXY, equation (4) shows that matrix M of Equation (3) is a suitable warping matrix to be applied by stage 62 to modify the input noise WXY to make its spatial properties match those determined by the target matrix $R_T$.

When stage 62 (of Fig. 4) applies a warping matrix $M = (R_T/ R)^{1/2}$ to each frequency band of a frame of modified noise output from stage 60 (in response to a frame of input noise WXZ), the output of stage 62 is a frame of modified noise, W'X'Y'. If a frame of this modified noise were applied as the input to stage 54, the covariance matrix R determined by stage 54 for each frequency band would match the target matrix $R_T$ for the band, which is the identity matrix of Equation (2) in the example, but can be another target covariance matrix in other implementations.

If the warping matrix (for each frequency band) applied by stage 62 is unitary, stage 60 typically applies gain (as a function of frequency band) to input noise to implement the desired noise suppression depth profile (determined by stage 56) to make the frequency amplitude spectrum of stage 60's output (and stage 62's output) match the target spectrum. Alternatively, the warping matrix applied by stage 62 (for a frequency band) is not unitary, and stages 60 and 62 together apply gain to the input noise to implement the desired noise suppression depth profile (to make the frequency amplitude spectrum of the output of stage 62 match the target spectrum, although the output of stage 60 does not match the target spectrum). The choice of the target matrix $R_T$ (e.g., the choice as to whether it is unitary) determines which of these two classes of implementations of the Fig. 4 system should be employed.

It should be appreciated that in operation of the Fig. 4 system, an estimated background noise covariance matrix (R) for each frequency band of each frame of noise of the input audio is used, with a target covariance matrix ($R_T$) indicative of a target spatial property of noise in the band, to modify the frame to generate a modified frame having a spatial property which matches the target spatial property. An appropriate operation on the covariance matrix (R) determines a linear mixing matrix (M) which is used to impart the target spatial (covariance) property to the output soundfield, which works to achieve an improved spatial consistency between output soundfields resulting from sound captured at different endpoints.

In some embodiments (including some implementations of Fig. 4 in which the target matrix $R_T$ is isotropic), the transform (determined by target matrix $R_T$) which is applied to noise by stage 62 applies gain (as a function of frequency band) so as to modify the frequency amplitude spectrum of the noise to match a target spectral profile. In some embodiments, the target spatial (covariance) structure may not be spatially white (identity) across the input audio channels, and instead may vary across frequency bands. For example, the lower frequency bands may be more correlated in the target which can reduce unpleasant room modes, and at higher bands the target spatial structure may be isotropic. In some embodiments, the spatial warping matrix is deliberately determined so that it applies spatial bias to input noise in an effort to provide an improved conference experience. One option is to modify input noise so that the modified noise is rendered so as to be perceived as originating from an apparent source location (determined by target spatial properties) away from a different apparent source location of rendered speech. Thus, for example, the target matrix may have form:

$$R_{T} = \ 10^{-4} * \begin{bmatrix} 1 & -.25 & 0 \\ -.25 & 0.5 & 0 \\ 0 & 0 & 1 \end{bmatrix}.$$

In another exemplary implementation of the Fig. 4 embodiment, a frame of input audio WXY determines the covariance matrix of equation (1) above:

$$R = 1.0^{-04} * $$

$$\begin{matrix} 1.0000 & 0.1000 & 0 \\ 0.1000 & 0.9000 & 0 \\ 0 & 0 & 0.8000 \end{matrix} ,$$

and the target matrix $R_T$ is:

$$R_T =$$

$$10^{-06} *$$

$$\begin{matrix} 1.0000 & 0 & 0 \\ 0 & 1.0000 & 0 \\ 0 & 0 & 1.0000. \end{matrix}$$

Thus, $M = (R_T/R)^{1/2}$ is:

$$M =$$

$$\begin{matrix} 0.1004 & -0.0054 & 0 \\ -0.0054 & 0.1059 & 0 \\ 0 & 0 & 0.1118. \end{matrix}$$

Based on this matrix M, and assuming probability p = 0.5, matrix A of Equation (5) is:

$$A = M^{(1-p)} =$$

$$\begin{matrix} 0.3168 & -0.0085 & 0 \\ -0.0085 & 0.3253 & 0 \\ 0 & 0 & 0.3344. \end{matrix}$$

It is worth noting that in this case, there is approximately a 20dB difference between the input spectra and the desired target spectra. The probability of p=0.5 effects half of the desired suppression, which results in a matrix A being applied with a scaling of around -10dB as expected. In this case, the matrix A implements both the suppression and spectral/spatial warping.

In some embodiments (e.g., the FIG. 5 embodiment to be described below), a warping matrix (e.g., a matrix implemented by stage 162 of Fig. 5) for each frequency band is determined, and by applying these warping matrices to the frequency bands of a frame of input audio (a frame indicative of noise), the inventive system makes the spectral and spatial properties of the resulting modified audio (noise) match both a target spectrum and target spatial properties.

It will be apparent to those of ordinary skill in the art that some embodiments of the invention implement scaling and rotation of multiple channels such that a certain covariance or second order statistical target is achieved, where the second order statistic is expressed, considered, and matched over space and frequency, and utilization is made of time averaging of the input statistics during periods of identified low or absent signal of interest level. Given the algebraic nature of the overall signal manipulation, it may be implemented by varying sub operations of scaling individual channels, scaling the complete channel set and/or performing a linear operation on the set of channels that performs or is capable of performing some scaling and or rotation (cross talk mixing) of the multi-channel set. It is envisaged that this operation can be applied at various points in the chain where there is access to: (a) the target second order statistics, (b) the estimate of the recent input second order statistics integrated over periods of low activity, and (c) the degree or extent of application and any associated time constants or controls. This application and operation may be singular or distributed and

consideration of the desired signal manipulation outcome leads to various possible stages and/or optimizations that are well known to ordinarily skilled practitioners in the art of multichannel signal processing.

Thus, the warping matrix applied (e.g., by stage 62 of the Fig. 4 system or stage 162 of the Fig. 5 system) in different implementations of the invention can be of a variety of different types. For example, it may include just the cross terms, or it may include the direct terms and implement scaling. Some embodiments implement operations of scaling and cross talk, such that when they are applied to the current noise covariance estimate they result in a covariance that is warped in the intended target direction in both a spatial aspect (covariance) and a spectral aspect (covariance as a function of frequency). The spatial warp aspect may or may not be frequency dependent, and will generally be appropriately frequency smoothed. For example, some embodiments apply a frequency dependent gain across the channels to achieve the desired spectral match (one gain for all channels), and then a single matrix (spatial warp) for each frequency bin or band. In some embodiments, each frequency bin or band is analyzed to determine the operation(s) to be performed thereon.

The system of Fig. 5 (like that of Fig. 4) is an example of an implementation of elements 16, 18, 20, and 22 in endpoint 1 of the Fig. 1 system. In the Fig. 5 embodiment (as in the Fig. 4 embodiment), the input WXY audio signal is a multichannel audio signal indicative of a soundfield captured by a microphone array (e.g., microphones M1, M2, and M3 of Fig. 1).

The Fig. 5 system includes voice activity detector (VAD) 150, processor 154, and spectral modification and spatial warping stage 162, connected as shown. VAD 150 is configured to determine the probability as to whether each frame of the input audio WXY (i.e., the samples indicative of each frame of the input audio WXY) is indicative of speech (e.g., speech in the presence of noise) or only noise, and to output a speech probability value ("p") for each frame.

Processor 154 is configured to perform the functions of noise estimation block 52 of Fig. 4, and a slightly modified version of the functions of control value generation elements 56, 59, 54, and 55 of Fig. 4. Spectral modification and spatial warping stage 162 is configured to perform the combined functions of both of stages 60 and 62 of Fig. 4 (i.e., both a spectral shaping function to cause the output of stage 162 to match a target spectrum, and as spatial warping function to cause the output of stage 162 to match a target spatial property set).

More specifically, processor 154 is configured to determine, for each frequency band of each frame of input audio WXY, a set of gain control values M which determine (or are organized as) a matrix M, of form $M = (R_T/R)^{1/2}$, where each matrix R is a source noise covariance matrix (or other data structure) indicative of spatial properties of the frame of input audio in the band, the matrices R (for all the bands) determine the frequency amplitude (e.g., power) spectrum of the frame of input audio, each matrix $R_T$ determines a set of target spatial properties of output audio in the band, the matrices $R_T$ (for all the bands) determine a target spectrum (e.g., a target power spectrum) for output audio, and $R_T/R$ denotes matrix multiplication of a matrix $R_T$ by the inverse of a matrix R. Thus, stage 154 determines a specific spectral modification and spatial warping matrix M to be applied by stage 162 to each frequency band of each frame of the input audio WXY.

In a typical implementation of Fig. 5, for a frame having a speech probability value of p = 1, indicating that the frame is indicative of speech (e.g., speech in the presence of noise), the values M output from processor 154 cause stage 162 to apply to the frame the same default modification that would be applied to the frame by combined operation of stages 60 and 62 (of the Fig. 4 system) under control of the default control values asserted thereto from elements 59 and 55 (of Fig. 4). In this typical implementation of Fig. 5, for a frame having a speech probability value of p = 0, indicating that the frame is indicative of noise, the values M output from processor 154 cause stage 162 to apply to the frame the same modification that would be applied to the frame by combined operation of stages 60 and 62 (of the Fig. 4 system) under control of the control values generated in elements 56 and 54 of Fig. 4 (and asserted to stages 60 and 62 from elements 56 and 54) in response to the frame. In this typical implementation of Fig. 5, for a frame having a speech probability value in the range 0 < p < 1, the values M output from processor 154 cause stage 162 to apply to the frame a modification intermediate to that which would be applied to a frame of noise by combined operation of stages 60 and 62 (of the Fig. 4 system) and that which would be applied to a frame of speech by combined operation of stages 60 and 62 (of the Fig. 4 system).

In a class of embodiments of the invention, a target matrix (e.g., target matrix $R_T$ of Fig. 4 or of a variation on the Fig. 4 system, or target matrix $R_T$ of Fig. 5), determines the absolute desired noise level of each frequency band (i.e., the target spectral properties) of the modified noise produced in accordance with the invention, as well as the target spatial properties of each frequency band of such modified noise. In some embodiments in this class, in any frequency band, based on speech probability, p (the probability that the content in such band is indicative of speech, e.g., as determined by an implementation of VAD 50 or 150), both spatial warping and effective noise reduction gain (spectral modification) can be implemented by controlling a gain stage (e.g., stage 60 of Fig. 4 or a subsystem of stage 162 of Fig. 5) to apply default gain (e.g., determined by element 59 of Fig. 4) to the input audio, and controlling a spectral modification and spatial warping stage (e.g., stage 62 of Fig. 4 or a subsystem of stage 162 of Fig. 5) to apply a set of matrices $A_i$ to each frame (whose "i"th frequency band can be referred to as $G_i$) output from the gain stage to generate the desired output audio (whose "i"th frequency band can be referred to as $G'_i$):

$$G'_i = A_i\, G_i , \qquad\qquad\qquad \text{Eq. (5)}$$

where each matrix $A_i$ is applied to samples in a different frequency band $G_i$ of the frame, each matrix $A_i$ has form $A_i = M_i^{(1-p)}$, each matrix $M_i$ has form $M_i = (R_T/R)^{1/2}$, where R is a source noise covariance matrix (or other data structure) indicative of spatial properties of the frame of input audio in the "i"th band, the matrices R (for all the bands) determine the frequency amplitude (e.g., power) spectrum of the frame of input audio, and each matrix $R_T$ determines a target gain and a target spatial property set for a different one (the "i"th one) of the bands.

Using such a matrix $A_i$, with input audio in the "i"th band and a target matrix $R_T$ for the "ith band which satisfy the above equations (1), (2), and (3), with an input noise estimate at -40dB, and target isotropic noise at -60dB (20sB SNRi), and speech probability equal to p = 0.5, it is apparent that Equation (5) determines the complete desired noise suppression matrix for the filterbank of the inventive system for the "i"th band. As expected, the diagonal elements of matrix $A_i$ in this example represent approximately 10dB of attenuation of the input audio, which is half of the desired noise suppression gain (SNRi) due to the speech probability at that point. In the example, the matrix $A_i$ also provides spatial warping to correct for the nonisotropic nature of the input audio.

Aspects of the invention include a system or device configured (e.g., programmed) to perform any embodiment of the inventive method, and a computer readable medium (e.g., a disc) which stores code for implementing any embodiment of the inventive method or steps thereof For example, the inventive system can be or include a programmable general purpose processor, digital signal processor, or microprocessor, programmed with software or firmware and/or otherwise configured to perform any of a variety of operations on data, including an embodiment of the inventive method or steps thereof. Such a general purpose processor may be or include a computer system including an input device, a memory, and a processing subsystem that is programmed (and/or otherwise configured) to perform an embodiment of the inventive method (or steps thereof) in response to data asserted thereto.

The system of Fig. 4 or Fig. 5 (or elements of endpoint 1 of the Fig. 1 system other than microphones M1, M2, and M3) can be implemented as a configurable (e.g., programmable) digital signal processor (DSP) that is configured (e.g., programmed and otherwise configured) to perform required processing on audio signal(s), including performance of an embodiment of the inventive method. Alternatively, the system of Fig. 4 or Fig. 5 (or elements of endpoint 1 of the Fig. 1 system other than microphones M1, M2, and M3) can be implemented as a general purpose processor (e.g., a personal computer (PC) or other computer system or microprocessor, which may include an input device and a memory) which is programmed with software or firmware and/or otherwise configured to perform any of a variety of operations including an embodiment of the inventive method. Alternatively, elements 10, 12, 14, 16, 18, 20, and 22 of endpoint 1 of the Fig. 1 system can be implemented as a general purpose processor or DSP configured (e.g., programmed) to perform noise modification in accordance with the invention, and encoder 24 (or encoder 24 and decoder 26) of endpoint 1 can be implemented as another appropriately configured general purpose processor or DSP. A general purpose processor configured to perform an embodiment of the inventive method would typically be coupled to an input device (e.g., a mouse and/or a keyboard), a memory, and a display device.

Another aspect of the invention is a computer readable medium (e.g., a disc) which stores code for implementing any embodiment of the inventive method or steps thereof

While specific embodiments of the present invention and applications of the invention have been described herein, it will be apparent to those of ordinary skill in the art that many variations on the embodiments and applications described herein are possible without departing from the scope of the invention described and claimed herein. It should be understood that while certain forms of the invention have been shown and described, the invention is not to be limited to the specific embodiments described and shown or the specific methods described.

**Claims**

1. A method for modifying noise captured during a conference at each endpoint of a set of at least two endpoints of a teleconferencing system, said method including the steps of:

    (a) generating first noise samples indicative of noise captured during the conference at a first one of the endpoints and second noise samples indicative of noise captured during the conference at a second one of the endpoints, the first noise samples being a first subset of a set of first frames of audio samples captured at the first one of the endpoints during the conference, each frame of the first subset of the set of first frames being indicative of noise but not a significant level of speech, and each frame of a second subset of the set of first frames being indicative of speech uttered by a conference participant at the first one of the endpoints, and the second noise samples being a first subset of a set of second frames of audio samples captured at the second one of the endpoints during the conference, each frame of the first subset of the set of second frames being indicative of noise but not a significant level of speech, and each frame of a second subset of the set of second frames being indicative of speech uttered by a conference participant at the second one of the endpoints;

    (b) modifying the first noise samples to generate first modified noise samples indicative of modified noise having a frequency-amplitude spectrum which matches a target spectrum, and at least one spatial property which matches at least one target spatial property, and modifying the second noise samples to generate second modified noise samples indicative of modified noise having a frequency-amplitude spectrum which matches the target spectrum, and at least one spatial property which matches the target spatial property; and

(c) generating first encoded audio at the first one of the endpoints by encoding the first modified noise samples and encoding each frame of the second subset of the set of first frames, and generating second encoded audio at the second one of the endpoints by encoding the second modified noise samples and encoding each frame of the second subset of the second frames.

2. The method of claim 1, wherein the at least one target spatial property includes at least one target spatial property for each band of at least one frequency band of the first noise samples, and wherein step (b) includes the steps of:

for said each band, determining a covariance matrix indicative of at least one spatial property of the noise in the band indicated by the first noise samples;

generating intermediate samples by applying band-specific gain to said each band of the first noise samples; and processing the intermediate samples to generate the first modified noise samples, including by applying a band-specific warping matrix to each band of the intermediate samples, wherein the warping matrix for each band is determined by the covariance matrix for the band and the at least one target spatial property for said band.

3. The method of any one of the preceding claims, wherein the at least one target spatial property includes at least one target spatial property for each band of at least one frequency band of the first noise samples, and wherein step (b) includes the steps of:

for said each band, determining a data structure indicative of at least one spatial property of the noise in the band indicated by the first noise samples;

generating intermediate samples by applying band-specific gain to said each band of the first noise samples; and processing the intermediate samples to generate the first modified noise samples, including by applying a band-specific warping matrix to each band of the intermediate samples, wherein the warping matrix for each band is determined by the data structure for the band and the at least one target spatial property for said band.

4. The method of any one of the preceding claims, wherein the at least one target spatial property includes at least one target spatial property for each band of at least one frequency band of the first noise samples, and wherein step (b) includes the steps of:

for said each band, determining a covariance matrix indicative of at least one spatial property of the noise in the band indicated by the first noise samples; and

processing the first noise samples to generate the first modified noise samples, including by applying a band-specific spectral modification and warping matrix to each band of the first noise samples, wherein the spectral modification and warping matrix for each band is determined by the covariance matrix for the band, the at least one target spatial property for said band, and the target spectrum.

5. The method of any one of the preceding claims, wherein the at least one target spatial property includes at least one target spatial property for each band of at least one frequency band of the first noise samples, and wherein step (b) includes the steps of:

for said each band, determining a data structure indicative of at least one spatial property of the noise in the band indicated by the first noise samples; and

processing the first noise samples to generate the first modified noise samples, including by applying a band-specific spectral modification and warping matrix to each band of the first noise samples, wherein the spectral modification and warping matrix for each band is determined by the data structure for the band, the at least one target spatial property for said band, and the target spectrum.

6. The method of claim 1, also including the steps of:

transmitting the first and second encoded audio respectively generated at said first and second endpoints to a server of the teleconferencing system; and

at the server, generating conference audio indicative of a mix or sequence of audio captured at the first and second endpoints.

7. The method of any one of the preceding claims, wherein each of the endpoints is a telephone system.

8. A system configured for use as a teleconferencing system endpoint in a teleconferencing system comprising a link and at least two teleconferencing system endpoints coupled to the link, the system including:

a microphone array;
a first subsystem coupled and configured to generate noise samples indicative of noise captured during a conference by the microphone array, the noise samples being a first subset of a set of frames of audio samples captured during the conference, each frame of the first subset being indicative of noise but not a significant level of speech, and each frame of a second subset of the set of frames being indicative of speech uttered by a conference participant;
a second subsystem coupled and configured to modify the noise samples to generate modified noise samples indicative of modified noise having a frequency-amplitude spectrum which matches a target spectrum, and at least one spatial property which matches at least one target spatial property; and
an encoder configured to generate encoded audio by encoding the modified noise samples and encoding each frame of the second subset of the set of frames,
wherein the target spectrum and the at least one target spatial property are common to the plurality of teleconferencing endpoints of the teleconferencing system.

9. The system of claim 8, wherein the second subsystem is configured to generate the modified noise samples by modifying the first subset of the set of frames.

10. The system of claim 8 or claim 9, wherein the at least one target spatial property includes at least one target spatial property for each band of at least one frequency band of the noise samples, and wherein the second subsystem is coupled and configured to: determine, for said each band, a covariance matrix indicative of at least one spatial property of the noise in the band indicated by the noise samples; generate intermediate samples by applying band-specific gain to said each band of the noise samples; and process the intermediate samples to generate the modified noise samples, including by applying a band-specific warping matrix to each band of the intermediate samples, wherein the warping matrix for each band is determined by the covariance matrix for the band and the at least one target spatial property for said band.

11. The system of any one of claims 8 to 10, wherein the at least one target spatial property includes at least one target spatial property for each band of at least one frequency band of the noise samples, and wherein the second subsystem is coupled and configured to:

determine, for said each band, a data structure indicative of at least one spatial property of the noise in the band indicated by the noise samples; generate intermediate samples by applying band-specific gain to said each band of the noise samples; and process the intermediate samples to generate the modified noise samples, including by applying a band-specific warping matrix to each band of the intermediate samples, wherein the warping matrix for each band is determined by the data structure for the band and the at least one target spatial property for said band.

12. The system of any one of claims 8 to 11, wherein the at least one target spatial property includes at least one target spatial property for each band of at least one frequency band of the noise samples, and wherein the second subsystem is coupled and configured to: determine, for said each band, a covariance matrix indicative of at least one spatial property of the noise in the band indicated by the noise samples; and process the noise samples to generate the modified noise samples, including by applying a band-specific spectral modification and warping matrix to each band of the noise samples, wherein the spectral modification and warping matrix for each band is determined by the covariance matrix for the band, the at least one target spatial property for said band, and the target spectrum.

13. A computer readable medium which stores code for implementing the method of any one of claims 1 to 7.

**Patentansprüche**

1. Verfahren zum Modifizieren von Rauschen, das während einer Konferenz an jedem Endpunkt eines Satzes von mindestens zwei Endpunkten eines Telekonferenzsystems aufgenommen wird, wobei das Verfahren die folgenden Schritte umfasst:

(a) Erzeugen von ersten Rauschproben, die Rauschen angeben, das während der Konferenz an einem ersten der Endpunkte aufgenommen wird, und von zweiten Rauschproben, die Rauschen angeben, das während der Konferenz an einem zweiten der Endpunkte aufgenommen wird, wobei die ersten Rauschproben eine erste Untermenge einer Menge von ersten Rahmen von Audioproben sind, die bei dem ersten der Endpunkte während der Konferenz aufgenommen werden, wobei jeder Rahmen der ersten Untermenge der Menge von ersten Rahmen Rauschen, aber keinen signifikanten Sprachpegel angibt, und jeder Rahmen einer zweiten Untermenge der Menge von ersten Rahmen Sprache angibt, die durch einen Konferenzteilnehmer an dem ersten der Endpunkte geäußert wird, und die zweiten Rauschproben eine erste Untermenge einer Menge von zweiten Rahmen von Audioproben sind, die an dem zweiten der Endpunkte während der Konferenz aufgenommen werden, wobei jeder Rahmen der ersten Untermenge der Menge von zweiten Rahmen Rauschen, aber keinen signifikanten Sprachpegel angibt, und jeder Rahmen einer zweiten Untermenge der Menge von zweiten Rahmen Sprache angibt, die durch einen Konferenzteilnehmer an dem zweiten der Endpunkte geäußert wird;

(b) Modifizieren der ersten Rauschproben, um erste modifizierte Rauschproben zu erzeugen, die ein modifiziertes Rauschen angeben, das ein Frequenzamplitudenspektrum, das mit einem Zielspektrum übereinstimmt, und mindestens eine Raumeigenschaft, die mit mindestens einer Zielraumeigenschaft übereinstimmt, aufweist, und Modifizieren der zweiten Rauschproben, um zweite modifizierte Rauschproben zu erzeugen, die ein modifiziertes Rauschen angeben, das ein Frequenzamplitudenspektrum, das mit dem Zielspektrum übereinstimmt, und mindestens eine Raumeigenschaft, die mindestens mit der Zielraumeigenschaft übereinstimmt, aufweist, und

(c) Erzeugen von erstem codiertem Audio an dem ersten der Endpunkte durch Codieren der ersten modifizierten Rauschproben und Codieren von jedem Rahmen der zweiten Untermenge der Menge von ersten Rahmen und Erzeugen von zweitem codiertem Audio an dem zweiten der Endpunkte durch Codieren der zweiten modifizierten Rauschproben und Codieren von jedem Rahmen der zweiten Untermenge der zweiten Rahmen.

2. Verfahren nach Anspruch 1, wobei die mindestens eine Zielraumeigenschaft eine Zielraumeigenschaft für jedes Band von mindestens einem Frequenzband der ersten Rauschproben umfasst und wobei Schritt (b) die folgenden Schritte umfasst:

für jedes Band Bestimmen einer Kovarianzmatrix, die mindestens eine Raumeigenschaft des Rauschens in dem Band angibt, das durch die ersten Rauschproben angegeben wird;
Erzeugen von Zwischenproben durch Anwenden einer bandspezifischen Verstärkung auf jedes Band der ersten Rauschproben und
Verarbeiten der Zwischenproben, um die ersten modifizierten Rauschproben zu erzeugen, was das Anwenden einer bandspezifischen Verzerrungsmatrix auf jedes Band der Zwischenproben umfasst, wobei die Verzerrungsmatrix für jedes Band durch die Kovarianzmatrix für das Band und die mindestens eine Zielraumeigenschaft für das Band bestimmt ist.

3. Verfahren nach einem der vorhergehenden Ansprüche, wobei die mindestens eine Zielraumeigenschaft mindestens eine Zielraumeigenschaft für jedes Band von mindestens einem Frequenzband der ersten Rauschproben umfasst und wobei Schritt (b) die folgenden Schritte umfasst:

für jedes Band Bestimmen einer Datenstruktur, die mindestens eine Raumeigenschaft des Rauschens in dem Band angibt, das durch die ersten Rauschproben angegeben wird;
Erzeugen von Zwischenproben durch Anwenden einer bandspezifischen Verstärkung auf jedes Band der ersten Rauschproben und
Verarbeiten der Zwischenproben, um die ersten modifizierten Rauschproben zu erzeugen, was das Anwenden einer bandspezifischen Verzerrungsmatrix auf jedes Band der Zwischenproben umfasst, wobei die Verzerrungsmatrix für jedes Band durch die Datenstruktur für das Band und die mindestens eine Zielraumeigenschaft für das Band bestimmt ist.

4. Verfahren nach einem der vorhergehenden Ansprüche, wobei die mindestens eine Zielraumeigenschaft mindestens eine Zielraumeigenschaft für jedes Band von mindestens einem Frequenzband der ersten Rauschproben umfasst und wobei Schritt (b) die folgenden Schritte umfasst:

für jedes Band Bestimmen einer Kovarianzmatrix, die mindestens eine Raumeigenschaft des Rauschens in dem Band angibt, das durch die ersten Rauschproben angegeben wird, und
Verarbeiten der ersten Rauschproben, um die ersten modifizierten Rauschproben zu erzeugen, was das Anwenden einer bandspezifischen spektralen Modifikationss- und Verzerrungsmatrix auf jedes Band der ersten Rauschproben umfasst, wobei die spektrale Modifikationss- und Verzerrungsmatrix für jedes Band durch die Kovarianzmatrix für das Band, die mindestens eine Zielraumeigenschaft für das Band und das Zielspektrum bestimmt ist.

5. Verfahren nach einem der vorhergehenden Ansprüche, wobei die mindestens eine Zielraumeigenschaft mindestens eine Zielraumeigenschaft für jedes Band von mindestens einem Frequenzband der ersten Rauschproben umfasst und wobei Schritt (b) die folgenden Schritte umfasst:

für jedes Band Bestimmen einer Datenstruktur, die mindestens eine Raumeigenschaft des Rauschens in dem Band angibt, das durch ersten Rauschproben angegeben wird, und
Verarbeiten der ersten Rauschproben, um die ersten modifizierten Rauschproben zu erzeugen, was das Anwenden einer bandspezifischen spektralen Modifikationss- und einer Verzerrungsmatrix auf jedes Band der ersten Rauschproben umfasst, wobei die spektrale Modifikationss- und Verzerrungsmatrix für jedes Band durch die Datenstruktur für das Band, die mindestens eine Zielraumeigenschaft für das Band und das Zielspektrum bestimmt ist.

6. Verfahren nach Anspruch 1, das auch die folgenden Schritte umfasst:

Senden des ersten und des zweiten codierten Audios, die jeweils an dem ersten und dem zweiten Endpunkt erzeugt werden, an einen Server des Telekonferenzsystems und
bei dem Server Erzeugen von Konferenzaudio, das eine Mischung oder Abfolge von Audio angibt, das an dem ersten und dem zweiten Endpunkt aufgenommen wird.

7. Verfahren nach einem der vorhergehenden Ansprüche, wobei jeder der Endpunkte ein Telefonsystem ist.

8. System, das für die Verwendung als Telekonferenzsystemendpunkt in einem Telekonferenzsystem konfiguriert ist, das eine Verbindung und mindestens zwei Telekonferenzsystemendpunkte, die an die Verbindung gekoppelt sind, umfasst, wobei das System Folgendes enthält:

eine Mikrofongruppe;
ein erstes Untersystem, das gekoppelt und konfiguriert ist, Rauschproben zu erzeugen, die Rauschen angeben, das während einer Konferenz durch die Mikrofongruppe aufgenommen wird, wobei die Rauschproben eine erste Untermenge einer Menge von Rahmen von Audioproben sind, die während der Konferenz aufgenommen werden, wobei jeder Rahmen der ersten Untermenge Rauschen, aber keinen signifikanten Sprachpegel angibt, und jeder Rahmen einer zweiten Untermenge der Menge von Rahmen Sprache angibt, die durch einen Konferenzteilnehmer geäußert wird;
ein zweites Untersystem, das gekoppelt und konfiguriert ist, um die Rauschproben zu modifizieren, um modifizierte Rauschproben zu erzeugen, die modifiziertes Rauschen angeben, das ein Frequenzamplitudenspektrum, das mit einem Zielspektrum übereinstimmt, und mindestens eine Raumeigenschaft, die mit mindestens einer Zielraumeigenschaft übereinstimmt, aufweist, und
einen Codierer, der konfiguriert ist, codiertes Audio zu erzeugen, indem die modifizierten Rauschproben codiert werden und jeder Rahmen der zweiten Untermenge der Menge von Rahmen codiert wird,
wobei das Zielspektrum und die mindestens eine Raumeigenschaft den mehreren Telekonferenzendpunkten des Telekonferenzsystems gemeinsam sind.

9. System nach Anspruch 8, wobei das zweite Untersystem konfiguriert ist, die modifizierten Rauschproben zu erzeugen, indem die erste Untermenge der Menge von Rahmen modifiziert wird.

10. System nach Anspruch 8 oder Anspruch 9, wobei die mindestens eine Zielraumeigenschaft mindestens eine Zielraumeigenschaft für jedes Band von mindestens einem Frequenzband der Rauschproben umfasst und wobei das zweite Untersystem gekoppelt und konfiguriert ist, um: für jedes Band eine Kovarianzmatrix zu bestimmen, die mindestens eine Raumeigenschaft des Rauschens in dem Band angibt, das durch die Rauschproben angegeben wird; Zwischenproben zu erzeugen, indem eine bandspezifische Verstärkung auf jedes Band der Rauschproben angewendet wird, und die Zwischenproben zu verarbeiten, um die modifizierten Rauschproben zu erzeugen, was das Anwenden einer bandspezifischen Verzerrungsmatrix auf jedes Band der Zwischenproben umfasst, wobei die Verzerrungsmatrix für jedes Band durch die Kovarianzmatrix für das Band und die mindestens eine Zielraumeigenschaft für das Band bestimmt ist.

11. System nach einem der Ansprüche 8 bis 10, wobei die mindestens eine Zielraumeigenschaft mindestens eine Zielraumeigenschaft für jedes Band von mindestens einem Frequenzband der Rauschproben umfasst und wobei das zweite Untersystem gekoppelt und konfiguriert ist, um: für jedes Band eine Datenstruktur zu bestimmen, die mindestens eine Raumeigenschaft des Rauschens in dem Band angibt, das durch die Rauschproben angegeben wird; Zwischenproben zu erzeugen, indem eine bandspezifische Verstärkung auf jedes Band der Rauschproben angewendet wird, und die Zwischenproben zu verarbeiten, um die modifizierten Rauschproben zu erzeugen, was das Anwenden einer bandspezifischen Verzerrungsmatrix auf jedes Band der Zwischenproben umfasst, wobei die Verzerrungsmatrix für jedes Band durch die Datenstruktur für das Band und die mindestens eine Zielraumeigenschaft für das Band bestimmt ist.

12. System nach einem der Ansprüche 8 bis 11, wobei die mindestens eine Zielraumeigenschaft mindestens eine Zielraumeigenschaft für jedes Band von mindestens einem Frequenzband der Rauschproben umfasst und wobei das zweite Untersystem gekoppelt und konfiguriert ist: für jedes Band eine Kovarianzmatrix zu bestimmen, die mindestens eine Raumeigenschaft des Rauschens in dem Band angibt, das durch die Rauschproben angegeben wird, und die Rauschproben zu verarbeiten, um die modifizierten Rauschproben zu erzeugen, was das Anwenden einer bandspezifischen spektralen Modifikationss- und Verzerrungsmatrix auf jedes Band der Rauschproben umfasst, wobei die spektrale Modifikationss- und Verzerrungsmatrix für jedes Band durch die Kovarianzmatrix für das Band, die mindestens eine Zielraumeigenschaft für das Band und das Zielspektrum bestimmt ist.

13. Computerlesbares Medium, das Code speichert, um das Verfahren nach einem der Ansprüche 1 bis 7 zu implementieren.

## Revendications

1. Procédé pour modifier le bruit capturé lors d'une conférence à chaque extrémité d'un ensemble d'au moins deux points d'extrémité d'un système de téléconférence, ledit procédé comprenant les étapes suivantes :

(a) générer des premiers échantillons de bruit indicatifs du bruit capturé lors de la conférence à un premier des points d'extrémité et des seconds échantillons de bruit indicatifs du bruit capturé lors de la conférence à un second des points d'extrémité, les premiers échantillons de bruit étant un premier sous-ensemble d'un ensemble de premières trames d'échantillons audio capturés au premier des points d'extrémité pendant la conférence, chaque trame du premier sous-ensemble de l'ensemble des premières trames étant indicative du bruit mais pas d'un niveau significatif de parole, et chaque trame d'un second sous-ensemble de l'ensemble des premières trames étant indicative d'une parole prononcée par un participant à la conférence au premier des points d'extrémité, et les seconds échantillons de bruit étant un premier sous-ensemble d'un ensemble de secondes trames d'échantillons audio capturés au second des points d'extrémité pendant la conférence, chaque trame du premier sous-ensemble de l'ensemble des secondes trames étant indicative du bruit mais pas d'un niveau significatif de parole, et chaque trame d'un second sous-ensemble de l'ensemble de secondes trames étant indicative d'une parole prononcée par un participant à la conférence au second des points d'extrémité ;
(b) modifier les premiers échantillons de bruit pour générer des premiers échantillons de bruit modifiés indicatifs d'un bruit modifié ayant un spectre de fréquence amplitude qui correspond à un spectre cible et au moins une propriété spatiale qui correspond à au moins une propriété spatiale cible, et modifier les seconds échantillons de bruit pour générer des seconds échantillons de bruit modifiés indicatifs d'un bruit modifié ayant un spectre de fréquence amplitude qui correspond au spectre cible et au moins une propriété spatiale qui correspond à la propriété spatiale cible ; et
(c) générer un premier signal audio codé au premier des points d'extrémité en codant les premiers échantillons de bruit modifiés et en codant chaque trame du second sous-ensemble de l'ensemble des premières trames, et générer un second signal audio codé au second des points d'extrémité en codant les seconds échantillons de bruit modifiés et en codant chaque trame du second sous-ensemble des secondes trames.

2. Procédé selon la revendication 1, dans lequel l'au moins une propriété spatiale cible comprend au moins une propriété spatiale cible pour chaque bande d'au moins une bande de fréquences des premiers échantillons de bruit, et où l'étape (b) comprend les étapes suivantes :

pour chaque dite bande, déterminer une matrice de covariance indicative d'au moins une propriété spatiale du bruit dans la bande indiquée par les premiers échantillons de bruit ;
générer des échantillons intermédiaires en appliquant un gain spécifique à la bande à chaque bande des premiers échantillons de bruit ; et

traiter les échantillons intermédiaires pour générer les premiers échantillons de bruit modifiés, ce qui comprend d'appliquer une matrice de déformation spécifique à la bande à chaque bande des échantillons intermédiaires, où la matrice de déformation pour chaque bande est déterminée par la matrice de covariance pour la bande et l'au moins une propriété spatiale cible pour ladite bande.

3. Procédé selon l'une quelconque des revendications précédentes, dans lequel l'au moins une propriété spatiale cible comprend au moins une propriété spatiale cible pour chaque bande d'au moins une bande de fréquences des premiers échantillons de bruit, et où l'étape (b) comprend les étapes suivantes :

pour chaque dite bande, déterminer une structure de données indicative d'au moins une propriété spatiale du bruit dans la bande indiquée par les premiers échantillons de bruit ;

générer des échantillons intermédiaires en appliquant un gain spécifique à la bande à chaque bande des premiers échantillons de bruit ; et

traiter les échantillons intermédiaires pour générer les premiers échantillons de bruit modifiés, ce qui comprend d'appliquer une matrice de déformation spécifique à la bande à chaque bande des échantillons intermédiaires, où la matrice de déformation pour chaque bande est déterminée par la structure de données pour la bande et l'au moins une propriété spatiale cible pour ladite bande.

4. Procédé selon l'une quelconque des revendications précédentes, dans lequel l'au moins une propriété spatiale cible comprend au moins une propriété spatiale cible pour chaque bande d'au moins une bande de fréquences des premiers échantillons de bruit, et dans lequel l'étape (b) comprend les étapes suivantes :

pour chaque dite bande, déterminer une matrice de covariance indicative d'au moins une propriété spatiale du bruit dans la bande indiquée par les premiers échantillons de bruit ; et

traiter les premiers échantillons de bruit pour générer les premiers échantillons de bruit modifiés, ce qui comprend d'appliquer une matrice de déformation et de modification spectrale spécifique à la bande à chaque bande des premiers échantillons de bruit, où la matrice de déformation et de modification spectrale pour chaque bande est déterminée par la matrice de covariance pour la bande, l'au moins une propriété spatiale cible pour ladite bande, et le spectre cible.

5. Procédé selon l'une quelconque des revendications précédentes, dans lequel l'au moins une propriété spatiale cible comprend au moins une propriété spatiale cible pour chaque bande d'au moins une bande de fréquences des premiers échantillons de bruit, et dans lequel l'étape (b) comprend les étapes suivantes :

pour chaque dite bande, déterminer une structure de données indicative d'au moins une propriété spatiale du bruit dans la bande indiquée par les premiers échantillons de bruit ; et

traiter les premiers échantillons de bruit pour générer les premiers échantillons de bruit modifiés, ce qui comprend d'appliquer une matrice de déformation et de modification spectrale spécifique à la bande à chaque bande des premiers échantillons de bruit, où la matrice de déformation et de modification spectrale pour chaque bande est déterminée par la structure de données pour la bande, l'au moins une propriété spatiale cible pour ladite bande, et le spectre cible.

6. Procédé selon la revendication 1, comprenant également les étapes suivantes :

transmettre les premier et second signaux audio codés respectivement générés auxdits premier et second points d'extrémité vers un serveur du système de téléconférence ; et

au niveau du serveur, générer des conférences audio indicatives d'un mix ou d'une séquence de signaux audio capturés aux premier et second points d'extrémité.

7. Procédé selon l'une quelconque des revendications précédentes, dans lequel chacun des points d'extrémité est un système téléphonique.

8. Système configuré pour être utilisé comme point d'extrémité du système de téléconférence dans un système de téléconférence comprenant un lien et au moins deux points d'extrémité du système de téléconférence couplés au lien, le système comprenant :

un réseau de microphones ;

un premier sous-système couplé et configuré pour générer des échantillons de bruit indicatifs du bruit capturé pendant une conférence par le réseau de microphones, les échantillons de bruit étant un premier sous-ensemble d'un ensemble de trames d'échantillons audio capturées lors de la conférence, chaque trame du premier sous-ensemble étant indicative du bruit mais pas d'un niveau significatif de la parole, et chaque trame d'un second sous-ensemble de l'ensemble de trames étant indicative d'une parole prononcée par un participant à la conférence ;

un second sous-système couplé et configuré pour modifier les échantillons de bruit pour générer des échantillons de bruit modifiés indicatifs d'un bruit modifié ayant un spectre de fréquence amplitude qui correspond à un spectre cible, et au moins une propriété spatiale qui correspond à au moins une propriété spatiale cible ; et

un codeur configuré pour générer un signal audio codé en codant les échantillons de bruit modifiés et en codant chaque trame du second sous-ensemble de l'ensemble de trames,

où le spectre cible et l'au moins une propriété spatiale cible sont communs à la pluralité des points d'extrémité de téléconférence du système de téléconférence.

9. Système selon la revendication 8, dans lequel le second sous-système est configuré pour générer les échantillons de bruit modifiés en modifiant le premier sous-ensemble de l'ensemble de trames.

10. Système selon la revendication 8 ou la revendication 9, dans lequel l'au moins une propriété spatiale cible inclut au moins une propriété spatiale cible pour chaque bande d'au moins une bande de fréquences des échantillons de bruit, et dans lequel le second sous-système est couplé et configuré pour :

déterminer, pour chaque dite bande, une matrice de covariance indicative d'au moins une propriété spatiale du bruit dans la bande indiquée par les échantillons de bruit ; générer des échantillons intermédiaires en appliquant un gain spécifique à la bande à chaque dite bande des échantillons de bruit ; et traiter les échantillons intermédiaires pour générer les échantillons de bruit modifiés, ce qui comprend d'appliquer une matrice de déformation spécifique à la bande à chaque bande des échantillons intermédiaires,

où la matrice de déformation pour chaque bande est déterminée par la matrice de covariance pour la bande et l'au moins une propriété spatiale cible pour ladite bande.

11. Système selon l'une quelconque des revendications 8 à 10, dans lequel l'au moins une propriété spatiale cible inclut au moins une propriété spatiale cible pour chaque bande d'au moins une bande de fréquences des échantillons de bruit, et dans lequel le second sous-système est couplé et configuré pour : déterminer, pour chaque dite bande, une structure de données indicative d'au moins une propriété spatiale du bruit dans la bande indiquée par les échantillons de bruit ; générer des échantillons intermédiaires en appliquant un gain spécifique à la bande à chaque dite bande des échantillons de bruit ; et traiter les échantillons intermédiaires pour générer les échantillons de bruit modifiés, ce qui comprend d'appliquer une matrice de déformation spécifique à la bande à chaque bande des échantillons intermédiaires, où la matrice de déformation pour chaque bande est déterminée par la structure de données pour la bande et l'au moins une propriété spatiale cible pour ladite bande.

12. Système selon l'une quelconque des revendications 8 à 11, dans lequel l'au moins une propriété spatiale cible comprend au moins une propriété spatiale cible pour chaque bande d'au moins une bande de fréquences des échantillons de bruit, et dans lequel le second sous-système est couplé et configuré pour : déterminer, pour chaque dite bande, une matrice de covariance indicative d'au moins une propriété spatiale du bruit dans la bande indiquée par les échantillons de bruit ; et traiter les échantillons de bruit pour générer les échantillons de bruit modifiés, ce qui comprend d'appliquer une matrice de déformation et de modification spectrale spécifique à la bande à chaque bande des échantillons de bruit, où la matrice de déformation et de modification spectrale pour chaque bande est déterminée par la matrice de covariance pour la bande, l'au moins une propriété spatiale cible pour ladite bande, et le spectre cible.

13. Support lisible par ordinateur qui stocke un code pour la mise en oeuvre du procédé selon l'une quelconque des revendications 1 à 7.

*FIG. 1*

**FIG. 2**

**FIG. 3**

EP 2 779 161 B1

62 Spatial Warping Stage

WXY

g 60
g
g

X
X

W'X'Y'

50
Noise?

52
Noise Est.

56
Target

58

59
1

61

55
1

W

54
WXY
R ≈ R_T?

$M = \sqrt{R_T/R}$

**FIG. 4**

162
Spectral Modification and Spatial Warping

WXY

150
Noise?

W'X'Y'

P

154
Processor

$M = \sqrt{R_T/R}$

**FIG. 5**

**EP 2 779 161 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61781669 B
- WO IB2009055803 W
- WO 2010073193 A1
- WO 2012109384 A